# EUROPEAN PATENT APPLICATION

(11) **EP 4 840 607 A1**
(43) Date of publication of application: **18.11.2026**
(21) Application number: 25176371.0
(22) Date of filing: 14.05.2025
(51) Int. Cl.: B29B 9/06, B29B 9/12, B29B 9/14, B29C 48/04, B29C 64/153, B29C 48/05, B33Y 70/00

(54) **MULTI-COMPONENT FILAMENTS AND POWDERS**

(71) Applicant: Lean Plastics Technologies GmbH, 98693 Ilmenau (DE); Technische Universität Ilmenau, 98693 Ilmenau (DE)
(72) Inventor: Langlotz, Martin, 98693 Ilmenau (DE); Duengen, Matthias Achim, 99094 Erfurt (DE); Martini, Miguel, 98693 Ilmenau (DE); Puch, Florian, 99423 Weimar (DE)
(74) Representative: Stellbrink & Partner Patentanwälte mbB

(57) **Abstract**

The present invention relates to a powder, wherein the powder comprises a processed plurality of particles, wherein at least one, preferably each, of the processed plurality of particles comprises a plurality of components. The present invention also relates to a method and a system for manufacturing the powder, to a use of the powder in an additive manufacturing process, and to an object produced by an additive manufacturing process using the powder.

## Description

### Field

The present invention relates generally to the field of manufacturing processes. More particularly, it relates to a powder for use in an additive manufacturing process, and to a method and system for producing the powder.

### Background

In 3D printing (or, more generally, additive manufacturing) with plastics (or equivalently, polymers), material is processed into molded parts using powder bed-based fabrication (PBF). The molded parts are joined layer by layer from powder. Some PBF variants include Selective Laser Sintering (SLS), Multijet Fusion (MJF), High Speed Sintering (HSS) and Selective Absorption Fusion (SAF).

Usually, sintering is understood to mean that the temperature stays so low that melting does not occur and the adhesion of the particles results from diffusion processes. In powder based additive manufacturing processes, however, the temperature is locally high enough that melting can occur. Objects may be created from powder with powder based additive manufacturing processes, where powder is spread out and locally heated to create local adhesion and, thus, an object, layer by layer.

It may be of advantage for these processes that the powder used may exhibit certain properties. For example, less than 5 percent particles of the powder may advantageously be smaller than 10 µm, preferably smaller than 20 µm. This may enhance the spreadability of the powder.

Further exemplarily, to reduce warpage during the process, a low change in specific volume of the material during temperature changes, especially during crystallization, may be of advantage. The change in specific volume during crystallization may be lower than 10 %, preferably lower than 5 %, even more preferably lower than 2 %

A low viscosity of the material may also be advantageous, e.g. a shear viscosity at a shear of 1 s⁻¹ and at a temperature 20 °C above dynamic scanning calorimetry (DSC) melting peak of less than 10000 Pa-s (Pascal seconds), preferably less than 5000 Pa-s, even more preferably less than 1000 Pa-s.

Semi-crystalline materials with a large "sintering window" may also be preferred as materials for powders as they may be more robust to fluctuations in the temperature. A sintering window may be understood to a difference between melting and crystallization peaks (measured by DSC). The sintering window may advantageously be larger than 10K, preferably 20K, and most preferably 40K.

Commonly known powders may have problematic material efficiencies and reduced sustainability. This may be attributed to the technical solution chosen, viz., precipitated polyamide powders with strong post-condensation to meet as many requirements of the additive manufacturing process as possible. Typically known PBF procedures may also be affected by one or more problems as described further below.

There may be no variety in the available powder materials compared to those offered by injection molding or extrusion. As a result, it may not be technically feasible to develop many fields of application as the material requirements may not be met. For example, fire-retardant material-based powder may be of advantage in manufacturing fire-resistant objects. However, fire-retardant materials are easily affected by the sintering process and are, thus, not suitable for use in powders.

PA12 and PA11 are widely used materials in powders. However, they have not yet been integrated into the circular economy. Although PA12 and PA11 may be partially obtained from renewable raw materials, approaches for doing so are not as well established for a circular economy such as that for PET. In particular, when using PA11 and PA12 for additive manufacturing, the material efficiency in PBF may often be only around 50%. Combined with the current lack of recyclability of these materials, this may pose massive complexity and ecological challenges.

A reduction in complexity in PBF may be advantageous in order to open up further and larger fields of application for these processes. This may require, *inter alia,* an increase in material efficiency and material availability for producing powders. PA11 and PA12 may be relatively difficult to obtain due to their raw materials, leading to difficulty in manufacturing objects at a large scale with these materials.

Further, there is a growing need to reduce the carbon footprint of products. In PBF, this may mean switching to materials with a lower CO₂ footprint and improving material efficiency owing to the PBF process sequence and the associated demands on the material. During PBF, the powder material may be bonded together in layers by heat input. A low viscosity of the material may be favorable for a pore-free connection of the grains and layers with each other. This usually means a low molar mass. At the same time, relatively high mechanical strength and elongation at break is advantageous. This usually requires high molar masses. These contradictory requirements are typically solved with the PA12 from EOS (PA2200), for example, by using an unregulated PA12 with a relatively low viscosity. The heat input during local sintering/melting in the PBF triggers a chemical reaction in the unregulated PA12, which leads to an increase in the molar mass and thus the desired mechanical properties. This means that the initially contradictory requirements can be reconciled.

During the production of parts using PBF, large quantities of powder are usually also produced that may have not been processed into molded parts and that serve as support material during the process. This powder can be reused for the next PBF cycle. In the case of unregulated PA12 and PA11 powders, however, the molar mass also changes in the material that has not been processed into molded parts, so that the viscosity and other properties change. These changes may mean that the reproducibility of the molded part properties may be adversely affected if the powders are re-used. It may, therefore, be necessary to use certain minimum proportions of new powder material, even if large quantities of unprocessed powder from previous PBF cycles are available and may limit material efficiency.

In view of the above problems, it may be of advantage to have new powders for PBF that may meet the contradictory requirements for sintering/melting behaviour and mechanical properties as described above. As described further below, embodiments of the present technology aim to address this problem by providing powders containing particles comprising two or three (or, possibly, even more) components that may be optimized for these requirements. The outer layer of the particles may, for example, largely comprise sintering/melting-optimized material and the core may largely comprise material optimized for the desired mechanical (or other) properties.

These multi-component powders may not be unregulated materials whose properties change permanently during PBF and may, thus, provide consistent molded part properties over several PBF cycles requiring, at least substantially, no supply of new material, leading to increased material efficiency in PBF.

US10343303B2 appears to disclose a multi-component micro-pellet useful as a consumable material for making objects by powder based additive manufacturing. A method of making said micro-pellet and an object made by using said micro-pellets appears to also be disclosed. Powders used for PBF processes may advantageously have suitable flow characteristics to allow a uniform layer to be created before heating locally with a laser, for example. In particular, flow properties may be affected by a shape of particles in the powder. The disclosed micro-pellets have a generally cylindrical shape that may adversely affect flow properties of a powder containing the micro-pellets.

### Summary

In the following, reference will be made to a "length" of a particle comprised in a processed plurality of particles. For particles that have a generally cylindrical shape, that may be defined as any three-dimensional cut cylinder or a shape of the particle fitting within a best-fit cylindrical shape while occupying at least 50% of an interior volume of the best-fit cylindrical shape, the length of the particle may correspond to the length along the generally cylindrical shape. However, for particles that may not have a generally cylindrical shape, length may correspond to a maximum extension perpendicular to a substantially flat face of the particle, as described further below. The skilled person understands that for generally cylindrical particles this maximum extension may correspond to the length along the generally cylindrical shape.

In the following, various statistical distributions have been described. The skilled person understands that wherever a numeric distribution has been described, representing a distribution of a total number of particles with respect to a characteristic of the particles, equivalently, a volumetric distribution may be described, representing a distribution of a total volume of particles with respect to the characteristic of the particles. Similarly, wherever a volumetric distribution has been described, representing a distribution of a total volume of particles with respect to a characteristic of the particles, equivalently, a numeric distribution may be described, representing a distribution of a total number of particles with respect to the characteristic of the particles. The skilled person understands that any appropriate distribution may be employed to describe a powder containing a plurality of particles based, for example, on an ease of measurement of such distribution. Yet further exemplarily, other statistical distributions may be employed, such as distribution of a total mass.

In light of the above, it is an object of the present invention to overcome, or at least alleviate, some of the problems of the prior art. In particular, it is an object of the present invention to provide a powder that may comprise particles having multiple components, wherein the multiple components may be chosen in accordance with desired characteristics of a final object made using the powder. The present invention also relates to systems and methods for manufacturing such powders.

According to a first aspect, the present invention relates to a filament for fabrication of a powder for an additive manufacturing process, wherein the filament comprises a plurality of components. A majority of the plurality of components may preferably comprise thermoplastic polymers.

An extension of the filament in a first direction, that may be referred to as a length of the filament, may, at least significantly, be greater than an extension of the filament in a second direction, the second direction being, at least significantly, perpendicular to the first direction.

The plurality of components may be arranged in a plurality of layers along the second direction, each layer comprising and/or consisting of a distinct component.

One of the plurality of components, that may be referred to as a shell component, may encase, at least partially, preferably completely, a core of the filament, the core comprising the other components. In other words, the shell component may surround, at least partially, the other components. In yet other words, the shell component may, along a cross-section of the filament orthogonal to the length of the filament, be an outer portion of the filament relative to the other components. In even other words, the shell component may be a component farthest in the radial direction, for at least a part of the cross-section, from any point within the cross-section. The components in the core may be referred to as core components.

A viscosity, in a molten state, of the shell component may be lesser than a viscosity, in a molten state, of at least one, preferably any, of the other components. The viscosity may, in particular, be a shear viscosity of the component. The shear viscosity may typically depend (non-linearly) on temperature, pressure, and shear rate. Thus, having a lower/higher viscosity may depend on these boundary conditions. In particular, the skilled person understands that the shear viscosity may be compared at low shear rates (for example, less than 1/s) and, at least significantly, identical temperatures and at atmospheric pressure. For example, the shear viscosity at a shear of 1 s⁻¹ and at a temperature 20 °C above dynamic scanning calorimetry (DSC) melting peak may be less than 10000 Pa-s (Pascal seconds), preferably less than 5000 Pa-s, even more preferably less than 1000 Pa-s.

A melting point of the shell component may be lesser than a melting point of at least one, preferably any, of the other components.

The powder, as described above, may have to be used in a laser sintering process, wherein the laser has a defined wavelength, and an absorptance, at the defined wavelength, of at least one component may be greater than an absorptance, at the defined wavelength, of at least one, preferably any, of the other components. For example, the at least one component with the greater absorptance may be the shell component. Alternatively, the at least one component with the greater absorptance may be a component in the core, such as a layer directly underneath the shell component.

The powder may have to be used in a laser sintering process and the shell component may be sinterable. "Sinterability" of the shell component may be characterized, for example, by change in specific volume during temperature changes (local heating from a laser and subsequent cooling or crystallization, for example), and a size of a "sintering window" corresponding to a difference between melting and crystallization peaks as measured by DSC. In particular, it may be of advantage to reduce warpage that the change in the specific volume of the shell component during crystallization is lower than 10%, preferably lower than 5%, further preferably lower than 2%.

A larger sintering window may be preferred for the shell component as it may indicate increased robustness to fluctuations in temperature that may occur in the control of the machines. For example, the sintering window may be larger than 10K, preferably larger than 20K, further preferably larger than 40K.

A defined characteristic for the shell component may be different from the defined characteristic for at least one, preferably any, of the other components. For example, the defined characteristic may comprise any of an electrical conductivity, a magnetic permeability, a mechanical strength, a thermodynamic property, a processing aesthetic, a biocompatibility measure, a color, a bioresorption ability, a stability against degradation, an oxygen permeability, or a hydrogen permeability. For example, the thermodynamic property may be thermal conductivity.

The skilled person understands that bioresorption ability relates to an ability of a component to be broken down by the human body and bioresorbable components correspond to components that may be broken down by the human body. The plurality of components may comprise bioresorbable materials that may, for example, delay the release of a drug comprised in the inner-most component. This may allow manufacturing, for example, pills that may have different release times of different drugs or drug concentrations.

The shell component may constitute a fraction of a total volume of the filament in the range defined by 1% and 90%, preferably by 5% and 50%, further preferably by 10% and 30%.

At least one of the plurality of components, such as the shell component, may comprise any one of a polyamide, a polyethylene, a polypropylene, a polyetherketone, a polyoxymethylene acetal, a polytetrafluoroethylene, a polyphenylene sulfide, a polybutylene terephthalate, an aliphatic polyamide, polyamide 6, polyamide 6-6, polyamide 6-10, polyamide 6-12, polyamide 10, polyamide 10-10, polyamide 10-12, polyamide 11, polyamide 12, polycaprolactone, polylactic acid, a low-density polyethylene, a medium-density polyethylene, or a high-density polyethylene.

Each of the plurality of components may extend length-wise along the filament.

The filament may have a generally prismatic shape. A generally prismatic shape may be understood to be a shape such that a shape of the cross-section of the filament, at least significantly, perpendicular to the first direction at any point along the first direction is, at least significantly, identical. In particular, the filament may have a generally cylindrical shape such that the cross-section is, at least significantly, circular at each point along the length of the filament. However, in some embodiments, the shape may not be circular but may, for example, be polygonal, or elliptical.

An extension of the filament in the second direction may, at least significantly, be uniform along the first direction. In other words, a shape, and an extension of the cross-section of the filament does not vary, at least significantly, along the length of the filament. However, the skilled person understands that this is to only be considered exemplary but not limiting.

The plurality of layers, as described above, may be arranged in, at least significantly, a radial direction around a central axis of the filament. In other words, the plurality of components may be arranged annularly around a central component, or in a shell-core configuration, the shell component, as described above, encasing the core comprising the other components.

The plurality of components may alternatively be arranged in an islands-in-the-sea configuration. In other words, the plurality of components may not be arranged around a common axis, but may, for example, be distributed randomly over a cross-section of the filament. That is, the plurality of components may be arranged such that components other than the shell component may be embedded randomly within the shell component. In other words, the other components may be located off-axis from the central axis.

At least one of the plurality of components may comprise any of a recyclate, a bio-degradable, or a bio-based material. A recyclate may be understood to be a material that may be recycled.

Any component other than the shell component may comprise any of a recyclate, a bio-degradable, or a bio-based material.

At least one of the plurality of components may comprise a plurality of fibers. In other words, one of the plurality of components may be the plurality of fibers. Thus, in this context, the plurality may be treated as a singular entity.

Each of the plurality of fibers may be aligned in a defined direction, that may be referred to as an alignment direction. The plurality of fibers may, in particular, be of advantage in providing increased mechanical strength along the alignment direction. Thus, the plurality of fibers may be understood to comprise reinforcement fibers. The skilled person understands that the "plurality of fibers" refers to fibers within a filament and not to the filament, or a plurality thereof, itself.

The alignment direction may, at least significantly, be parallel to the first direction.

At least one of the plurality of components may comprise a polymer.

The plurality of fibers may be encased, at least partially, within the polymer.

The polymer may comprise any one of a polyamide, a polyethylene, a polypropylene, a polyetherketone, a polyoxymethylene acetal, a polytetrafluoroethylene, a polypheneylene sulfide, a polybutylene terephthalate, an aliphatic polyamide, polyamide 6, polyamide 6-6, polyamide 6-10, polyamide 6-12, polyamide 10, polyamide 10-10, polyamide 10-12, polyamide 11, polyamide 12, polycaprolactone, polylactic acid, a low-density polyethylene, a medium-density polyethylene, or a high-density polyethylene.

At least one of the plurality of fibers may comprise any of a carbon fiber, an aramid fiber, a UHMWPE (ultra-high molecular weight polyethylene) fiber, a cellulose fiber, a basalt fiber or a glass fiber. The plurality of fibers may be of advantage in improving a mechanical characteristic of the filament which a pure matrix polymer, such as those used as core components above, cannot improve. For example, a Young's modulus and/or a strength of the filament, and of the corresponding cut particle, may be increased with glass, carbon, cellulose and basalt fibers, while aramid and UHMWPE fibers may increase toughness.

A diameter of any one of the plurality of fibers may be in the range defined by 1 µm and 50 µm, preferably by 2 µm and 40 µm, further preferably by 5 µm and 20 µm.

A result of the at least one of the plurality of components comprising a plurality of fibers may be a reinforcement of the filament.

The filament may be reinforced along the length of the filament. That is, the alignment direction may be chosen to be, at least substantially, parallel to the length of the filament.

The plurality of fibers may constitute a fraction of a total volume of the filament in the range defined by 1% and 80%, preferably by 5% and 70%, further preferably by 10% and 40%.

According to a second aspect, the present invention relates to a method for manufacturing a filament as described above, wherein the method comprises extruding at least one of the plurality of components.

The method may comprise extruding a plurality, preferably each, of the plurality of components.

The filament may be as described above, and the method may comprise extruding the shell component.

The method may comprise co-extruding a plurality, preferably all, of the plurality of components.

The method may comprise pushing each of the plurality of extruded components through a spin pack to produce the plurality of layers as described above.

The method may comprise extruding the polymer encasing the plurality of fibers as described above.

The method may comprise aligning the plurality of fibers.

The plurality of fibers may be aligned, at least significantly, in the same direction, the same direction corresponding to the alignment direction. In other words, a first of the plurality of fibers may be aligned in a defined direction and a second of the plurality of fibers may also be aligned in the same direction as the defined direction, the defined direction then corresponding to the alignment direction.

The method may comprise coating the extruded polymer over the aligned plurality of fibers.

The coated plurality of fibers may be shaped through a die to produce a tape.

The method may further comprise cutting the tape in a direction, at least significantly, identical to the direction of alignment of the plurality of fibers, to produce the filament.

The method may comprise cutting using any of a blade, a laser, or a water jet.

The method may comprise cutting using a laser, the cutting comprising moving the tape relative to a laser beam.

The method may comprise scanning the laser beam over the tape.

The method may comprise focusing the laser beam on the tape, preferably to a point in a middle or a bottom of the tape. Preferably, the laser beam may be focused such that a focus depth spans a whole cross-section of the tape. Further preferably, the focus depth may span an even larger region to accommodate variations in a thickness of the tape or variations due to placement of the tape.

The method may comprise tearing the tape to produce the filament.

Tearing the tape may comprise simultaneously guiding the tape in a plurality of different directions.

Tearing the tape may comprise guiding the tape over an edge. In particular, guiding over the edge may allow effecting a tear parallel to the edge thus allowing control over a location where the tape is torn. In some embodiments, control over the location where the tape is torn may be achieved by means of one or more continuous or discontinuous (perforation) cuts made in the tape using, for example, any of a blade, a laser, or a water jet as described above.

The method may comprise choosing at least one, preferably a plurality, further preferably all, of the plurality of components based, at least in part, on a desired characteristic of an object manufactured using at least one particle derived from the filament.

According to a third aspect, the present invention relates to a system for manufacturing a filament as described above, wherein the system is configured to extrude at least one of the plurality of components.

The system may comprise at least one or a plurality of extruders.

Any of the at least one or the plurality of extruders may comprise a screw.

The system may comprise a spin pack.

The system may comprise at least one or a plurality of feed hoppers.

Each of the at least one or the plurality of feed hoppers may be connected to a distinct extruder.

The system may comprise at least one or a plurality of melt pumps.

The system may comprise a quenching chamber.

The system may comprise at least one or a plurality of godets.

The system may comprise at least one winder.

The system may comprise at least one blade.

At least one of the at least one blade may comprise a coating, preferably comprising a diamond-like material. The coating may, for example, comprise any of diamond-like carbon (DLC), TiN, TiAlN, or AlTiSiN.

The blade may itself be made, for example, of steel, particularly hardened tool steel, or of a ceramic.

The system may comprise at least one laser for cutting. At least one of the at least one laser may comprise a CO₂ laser or a fiber laser. A wavelength of the CO₂ laser may be 10.6 µm, whereas a wavelength of the fiber laser may be in the range defined by 1 and 1.1 µm. In particular, the laser may comprise a pulsed laser that may emit energy in short pulses with a duration shorter, for example, than 1 ns, such as 1 ps.

A required energy to create a cut may depend, for example, on an amount of material that needs to be evaporated during a cut. For example, a volume of evaporated material, when cutting a filament to produce a cut particle, can be estimated as a volume of a cylinder with a diameter equal to a diameter of the filament and a length equal to the laser spot beam diameter. Given a density of the filament material, the weight of evaporated material per cut may then be calculated. Depending on the polymer, for example, 0,5-3 kWh/kg or more may be required to evaporate the material. However, the skilled person understands that this may be the minimum energy required. The actual laser power required may further depend on the number of cuts performed per unit of time, or a scan speed. Generally, a scan speed of 10 - 45 m/s, or even 100 m/s, may be achieved. The skilled person understands that the required energy may further depend on an absorption, a reflection, a transmission co-efficient of the material being cut, and on beam parameters such as pulse energy, pulse frequency, and pulse length.

Further, while a CO₂ laser and a fiber laser have been described above as preferred lasers, the skilled person understands that other laser wavelengths may also be used, provided they can be absorbed by the filament and/or the tape. For example, additives may be added to the filament and/or the tape that may absorb defined wavelengths corresponding to a wavelength of a laser. Moreover, a size of a beam spot of the laser may be advantageously reduced to reduce an amount of evaporated material. Thus, single-mode lasers with a low wavelength like a fiber lasers (~1000 nm or even less) may be preferred.

The system may further comprise a scanning component configured to allow scanning a beam of the at least one laser over a filament and/or a tape.

The scanning component may comprise at least one mirror and/or at least one lens.

The system may further comprise a beam generation component configured to generate a scanning beam by shaping a beam of the at least one laser and/or by combining a plurality of beams of each of a plurality of lasers and/or by shaping a combined beam. A typical laser beam may have a rounded spot that may result in relatively high losses by evaporated material when scanned over a filament and/or a tape. Shaping the beam and/or combining multiple beams may allow for a (combined) beam that may comprise a shape similar to a thin line that may be more efficient at cutting through the material.

The beam generation component may be configured to direct the scanning beam to the scanning component.

The system may comprise at least one water jet for cutting.

A pressure of at least one of the at least one water jet may be in the range defined by 1000 bar and 10000 bar, preferably by 2000 bar and 8000 bar, further preferably by 2500 bar and 6000 bar.

The system may comprise a nozzle through which the at least one water jet is pushed, wherein a diameter of the nozzle may be in the range defined by 5 and 500 µm, preferably by 10 and 450 µm, further preferably by 80 and 300 µm. It may be of advantage to choose as small a size of the nozzle as possible limited, for example, by a viscosity of water and a pressure of the at least one water jet.

At least one of the at least one water jet may comprise sand, preferably with a particle size less than a diameter of the nozzle. The sand may act as an abrasive and improve an efficiency of the cutting process. However, preferably, the water jet may not comprise an abrasive when used to cut filaments without the plurality of fibers as described above.

The system may be configured to perform the method to manufacture a filament as described above.

According to a fourth aspect, the present invention relates to a method for manufacturing a powder, wherein the powder comprises a processed plurality of particles, wherein the method comprises cutting at least one or a plurality of filaments, wherein each of the at least one or the plurality of filaments comprises a filament as described above.

Each of the at least one or the plurality of filaments may comprise a filament as described above, wherein the method may comprise cutting in a direction, at least significantly, orthogonal to the first direction as described above.

A result of cutting the at least one or the plurality of filaments may be a plurality of cut particles.

The method may comprise melting or sintering, at least in part, each of the plurality of cut particles to produce each of the processed plurality of particles.

The method may comprise arranging each of the plurality of cut particles on a substantially flat surface before melting or sintering.

A result of melting or sintering, at least in part, each of the plurality of cut particles may be a smoothening of a surface of at least some, preferably each, of the plurality of cut particles. Smoothening may be understood to comprise, for example, a decrease in an average surface roughness of at least some of the plurality of cut particles. Smoothening may additionally, or alternatively, comprise rounding of edges and reduction of cutting residue/artifacts like burrs or other extensions of any of the cut particles which do not conform with its general prismatic shape.

At least one of the at least one or the plurality of filaments, that may be referred to as a shell-core filament, may comprise a filament as described above, wherein at least one of the plurality of cut particles may be cut from at least one of the at least one shell-core filament, wherein a result of melting or sintering, at least in part, the at least one particle, may be the shell component flowing relative to at least one, preferably each, of the components in the core.

The at least one of the at least one shell-core filament may comprise the features described above, wherein the shell component may flow relative to at least one, preferably each, of the components in the core in a direction, at least significantly, parallel to the first direction.

The method may further comprise cooling each of the plurality of particles after melting or sintering.

The shell component may cover, at least partially, the core of the filament at least at one, preferably at both, ends, along the first direction, of the at least one of the plurality of cut particles.

The method may comprise determining a temperature at and/or a duration for which to melt or sinter each of the plurality of cut particles.

The method may comprise determining the temperature and/or the duration based, at least in part, on a fraction of a surface area of any of the ends of the at least one of the plurality of cut particles covered by the shell component.

According to a fifth aspect, the present invention relates to a particle for a powder, wherein the particle comprises a plurality of components. The particle may, in particular, correspond to a particle resulting from melting, at least in part, of a cut particle, as described above.

The particle may be derived from a filament as described above.

The particle may be derived from a filament as described above, wherein the shell component may completely cover any other component in the particle.

The particle may be derived from a filament as described above, wherein at least one other component may not be covered, at least in part, by the shell component in the particle. In particular, not only the shell component, but also a core component may not completely cover at least one other core component in the particle.

The particle may comprise a substantially curved face.

The substantially curved face, or at least a part thereof, may comprise a significantly finite radius of curvature in at least two dimensions.

The substantially curved face may comprise any of the at least one other component and/or the shell component. In other words, any of the core components not covered by the shell component may be part of the substantially curved face. Alternatively, or additionally, the shell component may be part of the substantially curved face. The skilled person understands that when the shell component completely covers all the core components, as described above, only the shell component may be part of the substantially curved face.

Further, the skilled person understands that when the substantially curved face is made up of multiple components, such as the shell component and any of the core components, the substantially curved face may comprise one or more ridges where the shell component and any of the core components join.

The particle may comprise a substantially flat face.

The substantially flat face may comprise any of the at least one other component and/or the shell component.

A maximum extension of the particle in any dimension may be 500 µm, preferably 400 µm, further preferably 300 µm, yet further preferably 200 µm, even more preferably 100 µm, even more preferably 50 µm.

A maximum extension of the particle in a direction, at least significantly, parallel to a normal to the substantially flat face may be 300 µm, preferably 200 µm, further preferably 100 µm, even more preferably 50 µm.

A maximum extension of the particle in a plane, at least significantly, parallel to the substantially flat face may be 500 µm, preferably 400 µm, further preferably 300 µm, yet further preferably 200 µm, even more preferably 100 µm, even more preferably 50 µm.

The substantially curved face may define a boundary of the particle in a direction, at least significantly, parallel to a normal to the substantially flat face.

The particle may be derived from a filament containing the plurality of fibers as described above, wherein the polymer may completely encase the plurality of fibers in the particle.

The polymer may only partially encase the plurality of fibers in the particle.

In the particle, a ratio of a maximum extension of the polymer in the alignment direction to a maximum extension of the plurality of fibers in the alignment direction may be in the range defined by 0.2 and 1.3, preferably by 0.3 and 1.1, further preferably by 0.7 and 1.

In the particle, each of the plurality of fibers may be aligned in the alignment direction. In other words, the alignment of the plurality of fibers is, at least significantly, not disturbed by the melting process described above.

A result of the melting or sintering the cut particles, as described above, may be at least one of the plurality of cut particles being a particle as described above.

According to a sixth aspect, the present invention relates to a powder, wherein the powder is manufactured by a method as described above.

According to a seventh aspect, the present invention relates to a powder, wherein the powder comprises a processed plurality of particles, wherein at least one, preferably each, of the processed plurality of particles comprises a particle as described above.

The processed plurality of particles may constitute a majority of the powder.

The processed plurality of particles may comprise a majority by weight of the powder.

The processed plurality of particles may comprise a majority by volume of the powder.

The processed plurality of particles may define a volume distribution representing a distribution of the total volume of the processed plurality of particles and/or of the powder with a size of the particles.

The processed plurality of particles may define a number distribution representing a distribution of the total number of particles in the processed plurality and/or in the powder with a size of the particles.

Each of the processed plurality of particles may comprise a particle as described above, wherein the processed plurality of particles may define a volumetric relative size distribution representing a distribution of the total volume of the processed plurality and/or of the powder with a ratio of a maximum extension of the particles in a direction, at least significantly, parallel to a normal to the substantially flat face and a maximum extension of the particles in a plane, at least significantly, parallel to the substantially flat face.

Each of the processed plurality of particles may comprise a particle as described above, wherein the processed plurality of particles may define a numeric relative size distribution representing a distribution of the total number of particles in the processed plurality and/or in the powder with a ratio of a maximum extension of the particles in a direction, at least significantly, parallel to a normal to the substantially flat face and a maximum extension of the particles in a plane, at least significantly, parallel to the substantially flat face.

A median ratio of the numeric relative size distribution may be greater than 1 and less than 4 wherein a width of the numeric relative size distribution may be less than 2, preferably less than 1, further preferably less than 0.5, yet further preferably less than 0.1, or wherein the median ratio may be greater than 0.5 and at most 1 and the width may be less than 3, preferably less than 1, further preferably less than 0.5, yet further preferably less than 0.1, or wherein the median ratio may be greater than 0.1 and at most 0.5 and the width may be less than 4, preferably less than 1, further preferably less than 0.5, yet further preferably less than 0.1

Each of the processed plurality of particles may comprise a particle as described above, wherein the processed plurality of particles may define a numeric surface area distribution representing a distribution of the total number of particles in the processed plurality and/or in the powder with a ratio of an area of the substantially curved face to a total surface area of the particles.

A median ratio of the numeric relative size distribution may be greater than 0.8 and a width of the numeric relative size distribution may be less than 0.9, preferably less than 0.6, further preferably less than 0.3, yet further preferably less than 0.1, or wherein the median ratio may be greater than 0.6 and at most 0.8 and the width may be less than 1.3, preferably less than 0.6, further preferably less than 0.3, yet further preferably less than 0.1, or wherein the median ratio may be greater than 0.4 and at most 0.6 and the width may be less than 2, preferably less than 0.6, further preferably less than 0.3, yet further preferably less than 0.1, or wherein the median ratio may be greater than 0.2 and at most 0.5 and the width may be less than 2.2, preferably less than 0.6, further preferably less than 0.3, yet further preferably less than 0.1, or wherein the median ratio may be greater than 0.1 and at most 0.2 and the width may be less than 2.5, preferably less than 0.6, further preferably less than 0.3, yet further preferably less than 0.1.

A width of a distribution, as described herein, may be understood to be the ratio *(x₉₀ - x₁₀)*/*x₅₀,* wherein *xₖ* may be understood to be a value on the x-axis of the distribution such that k% of the number (for numeric distributions) or volume (for volumetric distributions) of particles in the processed plurality or in the powder have a value of a parameter varying along the x-axis less than or equal to *xₖ.* The skilled person understands that *x₅₀* then represents a median x value.

For example, in the above numeric distribution, the parameter that varies along the x-axis is the ratio of the area of the substantially curved face to the total surface area of a particle. Thus, k % of the number of particles have a value of the ratio less than or equal to *xₖ.*

Each of the processed plurality of particles may comprise a particle as described above, wherein the processed plurality of particles may define a numeric covering area distribution representing a distribution of the total number of particles in the processed plurality and/or in the powder with a ratio of a maximum extension of the polymer in the alignment direction to a maximum extension of the plurality of fibers in the alignment direction.

Each of the processed plurality of particles may comprise a particle as described above, wherein the processed plurality of particles may define a numeric covering area distribution representing a distribution of the total number of particles in the processed plurality and/or in the powder with a ratio of a total surface area of the other component(s) not covered by the shell component to a total surface area of the particles.

The processed plurality of particles may define a numeric composition distribution representing a distribution of the total number of particles in the processed plurality and/or in the powder with a number of components in the particles.

Each of the processed plurality of particles may comprise a particle as described above, wherein the processed plurality of particles may define a numeric composition distribution representing a distribution of the total number of particles in the processed plurality and/or in the powder with a fraction of the total volume occupied by the shell component in the particles.

Each of the processed plurality of particles may comprise a particle as described above, wherein the processed plurality of particles may define a numeric composition distribution representing a distribution of the total number of particles in the processed plurality and/or in the powder with a fraction of the total volume occupied by the plurality of fibers in the particles.

Each of the processed plurality of particles may comprise a particle as described above, wherein the processed plurality of particles may define a numeric size distribution representing a distribution of the total number of particles in the processed plurality and/or in the powder with a size of the particles.

Each of the processed plurality of particles may comprise a particle as described above, wherein the processed plurality of particles may define a numeric size distribution representing a distribution of the total number of particles in the processed plurality and/or in the powder with a maximum length of the plurality of fibers in the particles. The maximum fiber length for any particle may be determined, for example, by burning away the polymer (particularly in case of glass, carbon, or basalt fibers) and observing the fiber lengths.

Each of the processed plurality of particles may comprise a particle as described above, wherein the processed plurality of particles may define a volumetric size distribution representing a distribution of the total volume of particles in the processed plurality and/or in the powder with a length of the particles.

A width of the volumetric size distribution may be at least as large as 1, and wherein, when the median length is in the range defined by 40 µm and 80 µm, the width may be at most as large as 2.5, preferably as large as 4, or when the median length is in the range defined by 5 µm and 40 µm, the width may be at most as large as 2.5, preferably as large as 4, or when the median length is in the range defined by 80 µm and 150 µm, the width may be at most as large as 4, preferably as large as 6, or when the median length is in the range defined by 150 µm and 500 µm, the width is at most as large as 6.

The powder manufactured as described above may comprise a powder as described above.

According to an eight aspect, the present invention relates to a system for manufacturing a powder, wherein the powder comprises a processed plurality of particles, wherein the system is configured to cut at least one or a plurality of filaments, wherein each of the at least one or the plurality of filaments comprises a filament according to any of the preceding filament embodiments.

The system may comprise a cutting component comprising any of a blade, a water jet, or a laser.

The system may comprise a perforated plate comprising at least one channel, each of the at least one channel configured to allow at least one filament through, each of the at least one channel comprising a feed end through which the at least one filament can enter the channel and a cutting end corresponding to an end out of which the at least one filament can exit the channel, wherein the feed end lies in a feed plane of the perforated plate, and the cutting end lies in a cutting plane of the perforated plane.

Cutting the filament may comprise guiding the filament through one of the at least one channel.

The system may be configured to cut a section of the filament extending out of the channel at the cutting end.

The system may comprise a furnace.

The system may be configured to guide each of the plurality of cut sections of the at least one or the plurality of filaments through the furnace.

The system may comprise a conveyor belt configured to pass through the furnace, wherein the conveyor belt may comprise a substantially flat surface.

The system may be configured to disperse the plurality of cut sections on the flat surface of the conveyor belt passing through the furnace.

A temperature of the furnace may be greater than a melting point of any of the plurality of cut sections.

At least one of the plurality of cut sections may comprise a polymer, wherein the temperature of the furnace may be less than a decomposition temperature of the at least one cut section.

The system may further comprise a filament manufacturing system as described above, or at least one component thereof.

According to a ninth aspect, the present invention relates to a use of the powder as described above in an additive manufacturing process.

The additive manufacturing process may be a powder bed-based manufacturing process. In particular, a power bed-based manufacturing process may be understood to comprise the steps of spreading out powder over a bed and locally heating the powder to create local adhesion, thus creating an object layer by layer.

The additive manufacturing process may comprise any of Selective Laser Sintering (SLS), Multijet Fusion (MJF), High Speed Sintering (HSS), or Selective Absorption Fusion (SAF).

According to a tenth aspect, the present invention relates to a use of the powder as described above for drug delivery.

According to an eleventh aspect, the present invention relates to a use of the powder as described above for powder coating.

According to a twelfth aspect, the present invention relates to a use of the powder as described above for manufacturing an expanded polymer such as expanded polystyrene.

According to a thirteenth aspect, the present invention relates to an object produced by an additive manufacturing process, wherein the additive manufacturing process uses a powder as described above.

The additive manufacturing process may be a powder bed-based manufacturing process.

The object may comprise a network of open and/or closed cells. The phrase "and/or" may be understood to mean that the object may comprise a network of only open cells, of only closed cells, or of both open and closed cells.

At least one of the closed (open) cells may comprise a first of the plurality of components encased fully (only partially) by a second of the plurality of components.

The powder may comprise the features described above, wherein at least one of the at least one or the plurality of filaments may comprise the features as described above, or the particle may comprise the features described above, wherein the second component may comprise the shell component or the second component may comprise the polymer. The powder may comprise the features described above, wherein at least one of the at least one or the plurality of filaments may comprise the features as described above, or the particle may comprise the features described above, wherein the first component may comprise the plurality of fibers.

The present invention is also described by the following numbered embodiments.

Below filament embodiments will be discussed. These are abbreviated by the letter "F" followed by a number. Whenever reference is herein made to the "filament embodiments", the following embodiments are meant.
F1. A filament for fabrication of a powder for an additive manufacturing process, wherein the filament comprises a plurality of components. A majority of the plurality of components may preferably comprise thermoplastic polymers.
F2. The filament according to the preceding embodiment, wherein an extension of the filament in a first direction, that may be referred to as a length of the filament, is, at least significantly, greater than an extension of the filament in a second direction, the second direction being, at least significantly, perpendicular to the first direction.
F3. The filament according to the preceding embodiment, wherein the plurality of components is arranged in a plurality of layers along the second direction, each layer comprising and/or consisting of a distinct component.
F4. The filament according to any of the preceding filament embodiments, wherein one of the plurality of components, that may be referred to as a shell component, encases, at least partially, preferably completely, a core of the filament, the core comprising the other components.
F5. The filament according to the preceding embodiment, wherein a viscosity, in a molten state, of the shell component is lesser than a viscosity, in a molten state, of at least one, preferably any, of the other components.
F6. The filament according to any of the preceding filament embodiments and with the features of embodiment F4, wherein a melting point of the shell component is lesser than a melting point of at least one, preferably any, of the other components.
F7. The filament according to any of the preceding filament embodiments and with the features of embodiment F4, wherein the powder is to be used in a laser sintering process, wherein the laser has a defined wavelength, and wherein an absorptance, at the defined wavelength, of at least one component is greater than an absorptance, at the defined wavelength, of at least one, preferably any, of the other components.

For example, the at least one component with the greater absorptance may be the shell component. Alternatively, the at least one component with the greater absorptance may be a component in the core, such as a layer directly underneath the shell component.
F8. The filament according to any of the preceding filament embodiments and with the features of embodiment F4, wherein the powder is to be used in a laser sintering process, and wherein the shell component is sinterable.
F9. The filament according to any of the preceding filament embodiments and with the features of embodiment F4, wherein a defined characteristic for the shell component is different from the defined characteristic for at least one, preferably any, of the other components.
F10. The filament according to any of the preceding filament embodiments and with the features of embodiment F4, wherein the shell component constitutes a fraction of a total volume of the filament in the range defined by 1% and 90%, preferably by 5% and 50%, further preferably by 10% and 30%.
F11. The filament according to any of the preceding filament embodiments, optionally with the features of embodiment F4, wherein at least one of the plurality of components, such as the shell component, comprises any one of a polyamide, a polyethylene, a polypropylene, a polyetherketone, a polyoxymethylene acetal, a polytetrafluoroethylene, a polyphenylene sulfide, a polybutylene terephthalate, an aliphatic polyamide, polyamide 6, polyamide 6-6, polyamide 6-10, polyamide 6-12, polyamide 10, polyamide 10-10, polyamide 10-12, polyamide 11, polyamide 12, polycaprolactone, polylactic acid, a low-density polyethylene, a medium-density polyethylene, or a high-density polyethylene.
F12. The filament according to any of the preceding filament embodiments and with the features of embodiment F2, wherein each of the plurality of components extends length-wise along the filament.
F13. The filament according to any of the preceding filament embodiments, wherein the filament has a generally prismatic shape.
F14. The filament according to any of the preceding filament embodiments and with the features of embodiment F2, wherein an extension of the filament in the second direction is, at least significantly, uniform along the first direction.
F15. The filament according to any of the preceding filament embodiments and with the features of embodiment F3, wherein the plurality of layers is arranged in, at least significantly, a radial direction around a central axis of the filament.
F16. The filament according to any of the preceding filament embodiments but without the features of embodiment F3, wherein the plurality of components is arranged in an islands-in-the-sea configuration.
F17. The filament according to any of the preceding filament embodiments, wherein at least one of the plurality of components comprises any of a recyclate, a bio-degradable, or a bio-based material.
F18. The filament according to the preceding embodiment and with the features of embodiment F4, wherein any component other than the shell component comprises any of a recyclate, a bio-degradable, or a bio-based material.
F19. The filament according to embodiment F1, wherein at least one of the plurality of components comprises a plurality of fibers.
F20. The filament according to the preceding embodiment, wherein each of the plurality of fibers is aligned in a defined direction, that may be referred to as an alignment direction. The plurality of fibers may, in particular, be of advantage in providing increased mechanical strength along the alignment direction. Thus, the plurality of fibers may be understood to comprise reinforcement fibers. The skilled person understands that the "plurality of fibers" refers to fibers within a filament and not to the filament, or a plurality thereof, itself.
F21. The filament according to the preceding embodiment and with the features of embodiment F2, wherein the alignment direction is, at least significantly, parallel to the first direction.
F22. The filament according to any of the 3 preceding embodiments, wherein at least one of the plurality of components comprises a polymer.
F23. The filament according to the preceding embodiment, wherein the plurality of fibers is encased, at least partially, within the polymer.
F24 The filament according to any of the 2 preceding embodiments, wherein the polymer comprises any one of a polyamide, a polyethylene, a polypropylene, a polyetherketone, a polyoxymethylene acetal, a polytetrafluoroethylene, a polypheneylene sulfide, a polybutylene terephthalate, an aliphatic polyamide, polyamide 6, polyamide 6-6, polyamide 6-10, polyamide 6-12, polyamide 10, polyamide 10-10, polyamide 10-12, polyamide 11, polyamide 12, polycaprolactone, polylactic acid, a low-density polyethylene, a medium-density polyethylene, or a high-density polyethylene.
F25. The filament according to any of the embodiments F19 to F24, wherein at least one of the plurality of fibers comprises any of a carbon fiber, an aramid fiber, a UHMWPE (ultra-high molecular weight polyethylene) fiber, a cellulose fiber, a basalt fiber or a glass fiber.
F26. The filament according to any of the embodiments F20 to F25 and with the features of embodiment F12, wherein a diameter of any one of the plurality of fibers is in the range defined by 1 µm and 50 µm, preferably by 2 µm and 40 µm, further preferably by 5 µm and 20 µm.
F27. The filament according to any of the embodiments F20 to F26, wherein a result of the at least one of the plurality of components comprising a plurality of fibers is a reinforcement of the filament.
F28. The filament according to the preceding embodiment and with the features of embodiment F52, wherein the filament is reinforced along the length of the filament.
F29. The filament according to any of the embodiments F19 to F28, wherein the plurality of fibers constitutes a fraction of a total volume of the filament in the range defined by 1% and 80%, preferably by 5% and 70%, further preferably by 10% and 40%.

Below filament manufacturing method embodiments will be discussed. These are abbreviated by the letters "FM" followed by a number. Whenever reference is herein made to the "filament manufacturing embodiments", the following embodiments are meant.
FM1. A method for manufacturing a filament according to any of the preceding filament embodiments, wherein the method comprises extruding at least one of the plurality of components.
FM2. The method according to the preceding embodiment, wherein the filament comprises the features of any of embodiments F3 to F15, wherein the method comprises extruding a plurality, preferably each, of the plurality of components.
FM3. The method according to any of the 2 preceding embodiments, wherein the filament comprises the features of embodiment F4, wherein the method comprises extruding the shell component.
FM4. The method according to any of preceding filament manufacturing embodiments and with the features of embodiment FM2, wherein the method comprises co-extruding a plurality, preferably all, of the plurality of components.
FM5. The method according to any of the preceding filament manufacture embodiments and with the features of embodiment FM2, wherein the method comprises pushing each of the plurality of extruded components through a spin pack to produce the plurality of layers.
FM6. The method according to embodiment FM1, wherein the filament comprises the features of embodiment F22, wherein the method comprises extruding the polymer.
FM7. The method according to embodiment FM1, wherein the filament comprises the features of embodiment F20, wherein the method comprises aligning the plurality of fibers.
FM8. The method according to the preceding embodiment, wherein the plurality of fibers is aligned, at least significantly, in the same direction corresponding to the alignment direction.
FM9. The method according to the preceding embodiment and with the features of embodiment FM6, wherein the method comprises coating the extruded polymer over the aligned plurality of fibers.
FM10. The method according to the preceding embodiment, wherein the coated plurality of fibers is shaped through a die to produce a tape.
FM11. The method according to the preceding embodiment, wherein the method further comprises cutting the tape in a direction, at least significantly, identical to the direction of alignment of the plurality of fibers, to produce the filament.
FM12. The method according to the preceding embodiment, wherein the method comprises cutting using any of a blade, a laser, or a water jet.
FM13. The method according to any of the 2 preceding embodiments, wherein the method comprises cutting using a laser comprising moving the tape relative to a laser beam.
FM14. The method according to the preceding embodiment, wherein the method comprises scanning the laser beam over the tape.
FM15. The method according to any of the 2 preceding embodiments, wherein the method comprises focusing the laser beam on the tape, preferably to a point in a middle or a bottom of the tape.
FM16. The method according to any of the preceding filament manufacturing embodiments and with the features of embodiment FM10, wherein the method comprises tearing the tape to produce the filament.
FM17. The method according to the preceding embodiment, wherein tearing the tape comprises simultaneously guiding the tape in a plurality of different directions.
FM18. The method according to any of the 2 preceding embodiments, wherein tearing the tape comprises guiding the tape over an edge.
FM19. The method according to any of the preceding filament manufacturing embodiments, wherein the method comprises choosing at least one, preferably a plurality, further preferably all, of the plurality of components based, at least in part, on a desired characteristic of an object manufactured using at least one particle derived from the filament.

Below filament manufacturing system embodiments will be discussed. These are abbreviated by the letters "FS" followed by a number. Whenever reference is herein made to the "filament manufacturing system embodiments", the following embodiments are meant.
FS1. A system for manufacturing a filament according to any of the preceding filament embodiments, wherein the system is configured to extrude at least one of the plurality of components.
FS2. The system according to the preceding embodiment, wherein the system comprises at least one or a plurality of extruders.
FS3. The system according to the preceding embodiment, wherein any of the at least one or the plurality of extruders comprises a screw.
FS4. The system according to any of the preceding filament manufacturing system embodiments, wherein the system comprises a spin pack.
FS5. The system according to any of the preceding filament manufacturing system embodiments, wherein the system comprises at least one or a plurality of feed hoppers.
FS6. The system according to the preceding embodiment and with the features of embodiment FS2, wherein each of the at least one or the plurality of feed hoppers is connected to a distinct extruder.
FS7. The system according to any of the preceding filament manufacturing system embodiments, wherein the system comprises at least one or a plurality of melt pumps.
FS8. The system according to any of the preceding filament manufacturing system embodiments, wherein the system comprises a quenching chamber.
FS9. The system according to any of the preceding filament manufacturing system embodiments, wherein the system comprises at least one or a plurality of godets.
FS10. The system according to any of the preceding filament manufacturing system embodiments, wherein the system comprises at least one winder.
FS11. The system according to any of the preceding filament manufacturing system embodiments, wherein the system comprises at least one blade.
FS12. The system according to the preceding embodiment, wherein at least one of the at least one blade comprises a coating, preferably comprising a diamond-like material.
FS13. The system according to any of the preceding filament manufacturing system embodiments, wherein the system comprises at least one laser for cutting.
FS14. The system according to the preceding embodiment, wherein at least one of the at least one laser comprises a CO₂ laser or a fiber laser.
FS15. The system according to any of the 2 preceding embodiments, wherein the system further comprises a scanning component configured to allow scanning a beam of the at least one laser over a filament and/or a tape.
FS16. The system according to the preceding embodiment, wherein the scanning component comprises at least one mirror and/or at least one lens.
FS17. The system according to any of the preceding filament manufacturing system embodiments and with the features of embodiment FS13, wherein the system further comprises a beam generation component configured to generate a scanning beam by shaping a beam of the at least one laser and/or by combining a plurality of beams of each of a plurality of lasers and/or by shaping a combined beam.
FS18. The system according to the preceding embodiment and with the features of embodiment FS15, wherein the beam generation component is configured to direct the scanning beam to the scanning component.
FS19. The system according to any of the preceding filament manufacturing system embodiments, wherein the system comprises at least one water jet for cutting.
FS20. The system according to the preceding embodiment, wherein a pressure of at least one of the at least one water jet is in the range defined by 1000 bar and 10000 bar, preferably by 2000 bar and 8000 bar, further preferably by 2500 bar and 6000 bar.
FS21. The system according to any of the 2 preceding embodiments, wherein the system comprises a nozzle through which the at least one water jet is pushed, wherein a diameter of the nozzle is in the range defined by 5 and 500 µm, preferably by 10 and 450 µm, further preferably by 80 and 300 µm.
FS22. The system according to any of the 3 preceding embodiments, wherein at least one of the at least one water jet comprises sand, preferably with a particle size less than a diameter of the nozzle.
FS23. The system according to any of the preceding filament manufacturing system embodiments, wherein the system is configured to perform the method according to any of the preceding filament manufacturing embodiments.

Below powder manufacturing method embodiments will be discussed. These are abbreviated by the letters "PM" followed by a number. Whenever reference is herein made to the "powder manufacturing embodiments", the following embodiments are meant.
PM1. A method for manufacturing a powder, wherein the powder comprises a processed plurality of particles, wherein the method comprises cutting at least one or a plurality of filaments, wherein each of the at least one or the plurality of filaments comprises a filament according to any of the preceding filament embodiments.
PM2. The method according to the preceding embodiment, wherein each of the at least one or the plurality of filaments comprises the features of embodiment F2, wherein the method comprises cutting in a direction, at least significantly, orthogonal to the first direction.
PM3. The method according to any of the 2 preceding embodiments, wherein a result of cutting the at least one or the plurality of filaments is a plurality of cut particles.
PM4. The method according to the preceding embodiment, wherein the method comprises melting or sintering, at least in part, each of the plurality of cut particles to produce each of the processed plurality of particles.
PM5. The method according to the preceding embodiment, wherein the method comprises arranging each of the plurality of cut particles on a substantially flat surface before melting or sintering.
PM6. The method according to any of the 2 preceding embodiments, wherein a result of melting or sintering, at least in part, each of the plurality of cut particles is a smoothening of a surface of at least some, preferably each, of the plurality of cut particles.
PM7. The method according to any of the preceding powder manufacturing embodiments and with the features of embodiment PM4, wherein at least one of the at least one or the plurality of filaments, that may be referred to as a shell-core filament, comprises a filament with the features of any of embodiments F4 to F10, wherein at least one of the plurality of cut particles is cut from at least one of the at least one shell-core filament, wherein a result of melting or sintering, at least in part, the at least one particle, is the shell component flowing relative to at least one, preferably each, of the components in the core.
PM8. The method according to the preceding embodiment, wherein the at least one of the at least one shell-core filament comprises the features of embodiment F2, wherein the shell component flows relative to at least one, preferably each, of the components in the core in a direction, at least significantly, parallel to the first direction.
PM9. The method according to any of the preceding powder manufacturing embodiments and with the features of embodiment PM4, wherein the method further comprises cooling each of the plurality of particles after melting or sintering.
PM10. The method according to any of the 2 preceding embodiments, wherein the shell component covers, at least partially, the core of the filament at least at one, preferably at both, ends, along the first direction, of the at least one of the plurality of cut particles.
PM11. The method according to any of the preceding powder manufacture embodiments and with the features of embodiment PM4, wherein the method comprises determining a temperature at and/or a duration for which to melt or sinter each of the plurality of cut particles.
PM12. The method according to the preceding embodiment and with the features of embodiment PM10, wherein the method comprises determining the temperature and/or the duration based, at least in part, on a fraction of a surface area of any of the ends of the at least one of the plurality of cut particles covered by the shell component.

Below particle embodiments will be discussed. These are abbreviated by the letter "R" followed by a number. Whenever reference is herein made to the "particle embodiments", the following embodiments are meant.
R1. A particle for a powder, wherein the particle comprises a plurality of components. The particle may, in particular, correspond to a particle resulting from melting, at least in part, of a cut particle, as described above.
R2. The particle according to the preceding embodiment, wherein the particle is derived from a filament according to any of the preceding filament embodiments.
R3. The particle according to the preceding embodiment, wherein the particle is derived from a filament with the features of any of embodiments F4 to F10, wherein the shell component completely covers any other component in the particle.
R4. The particle according to the penultimate embodiment, wherein the particle is derived from a filament with the features of any of embodiments F4 to F10, wherein at least one other component is not covered, at least in part, by the shell component in the particle.
   In particular, not only the shell component, but also a core component may not completely cover at least one other core component in the particle.
R5. The particle according to any of the preceding particle embodiments, wherein the particle comprises a substantially curved face.
R6. The particle according to the preceding embodiment, wherein the substantially curved face, or at least a part thereof, comprises a significantly finite radius of curvature in at least two dimensions.
R7. The particle according to any of the 2 preceding embodiments and with the features of embodiment R4, wherein the substantially curved face comprises any of the at least one other component and/or the shell component.
R8. The particle according to any of the preceding particle embodiments, wherein the particle comprises a substantially flat face.
R9. The particle according to the preceding embodiment and with the features of embodiment R4, wherein the substantially flat face comprises any of the at least one other component and/or the shell component.
R10. The particle according to any of the preceding particle embodiments, wherein a maximum extension of the particle in any dimension is 500 µm, preferably 400 µm, further preferably 300 µm, yet further preferably 200 µm, even more preferably 100 µm, even more preferably 50 µm.
R11. The particle according to any of the preceding particle embodiments and with the features of embodiment R8, wherein a maximum extension of the particle in a direction, at least significantly, parallel to a normal to the substantially flat face is 300 µm, preferably 200 µm, further preferably 100 µm, even more preferably 50 µm.
R12. The particle according to any of the preceding particle embodiments and with the features of embodiment R8, wherein a maximum extension of the particle in a plane, at least significantly, parallel to the substantially flat face is 500 µm, preferably 400 µm, further preferably 300 µm, yet further preferably 200 µm, even more preferably 100 µm, even more preferably 50 µm.
R13. The particle according to any of the preceding particle embodiments and with the features of embodiments R5, and R8, wherein the substantially curved face defines a boundary of the particle in a direction, at least significantly, parallel to a normal to the substantially flat face.
R14. The particle according to any of the preceding particle embodiments and with the features of embodiment R2, but without the features of any of embodiments R3 and R4, wherein the particle is derived from a filament with the features of any of embodiments F19 to F28 and with the features of embodiment F22, wherein the polymer completely encases the plurality of fibers in the particle.
R15. The particle according to any of the preceding particle embodiments and with the features of embodiment R2, but without the features of any of embodiments R3 and R4, wherein the particle is derived from a filament with the features of any of embodiments F19 to F28 and with the features of embodiment F22, wherein the polymer partially encases the plurality of fibers in the particle.
R16. The particle according to any of the 2 preceding embodiments, wherein the filament comprises the features of embodiment F20, wherein, in the particle, a ratio of a maximum extension of the polymer in the alignment direction to a maximum extension of the plurality of fibers in the alignment direction is in the range defined by 0.2 and 1.3, preferably by 0.3 and 1.1, further preferably by 0.7 and 1.
R17. The particle according to any of the 3 preceding embodiments, wherein the filament comprises the features of embodiment F20, wherein, in the particle, each of the plurality of fibers is aligned in the alignment direction.
PM13. The method according to any of the preceding powder manufacturing method embodiments and with the features of embodiment PM4, wherein a result of the melting or sintering is at least one of the plurality of cut particles being a particle according to any of the preceding particle embodiments.

Below powder embodiments will be discussed. These are abbreviated by the letter "P" followed by a number. Whenever reference is herein made to the "powder embodiments", the following embodiments are meant.
P1. A powder, wherein the powder is manufactured by a method according to any of the preceding powder manufacturing embodiments.
P2. A powder, wherein the powder comprises a processed plurality of particles, wherein at least one, preferably each, of the processed plurality of particles comprises a particle according to any of the preceding particle embodiments.
P3. The powder according to the preceding embodiment, wherein the processed plurality of particles constitutes a majority of the powder.
P4. The powder according to any of the 2 preceding embodiments, wherein the processed plurality of particles comprises a majority by weight of the powder.
P5. The powder according to any of the 3 preceding powder embodiments, wherein the processed plurality of particles comprises a majority by volume of the powder.
P6. The powder according to any of the preceding powder embodiments and with the features of embodiment P2, wherein the processed plurality of particles defines a volume distribution representing a distribution of the total volume of the processed plurality of particles and/or of the powder with a size of the particles.
P7. The powder according to any of the preceding powder embodiments and with the features of embodiment P2, wherein the processed plurality of particles defines a number distribution representing a distribution of the total number of particles in the processed plurality and/or in the powder with a size of the particles.
P8. The powder according to any of the preceding powder embodiments and with the features of embodiment P2, wherein each of the processed plurality of particles comprises a particle according to embodiment R8, and wherein the processed plurality of particles defines a volumetric relative size distribution representing a distribution of the total volume of the processed plurality and/or of the powder with a ratio of a maximum extension of the particles in a direction, at least significantly, parallel to a normal to the substantially flat face and a maximum extension of the particles in a plane, at least significantly, parallel to the substantially flat face.
P9. The powder according to any of the preceding powder embodiments and with the features of embodiment P2, wherein each of the processed plurality of particles comprises a particle according to embodiment R8, and wherein the processed plurality of particles defines a numeric relative size distribution representing a distribution of the total number of particles in the processed plurality and/or in the powder with a ratio of a maximum extension of the particles in a direction, at least significantly, parallel to a normal to the substantially flat face and a maximum extension of the particles in a plane, at least significantly, parallel to the substantially flat face.
P10. The powder according to the preceding embodiment, wherein a median ratio of the numeric relative size distribution is greater than 1 and less than 4 and wherein a width of the numeric relative size distribution is less than 2, preferably less than 1, further preferably less than 0.5, yet further preferably less than 0.1, or wherein the median ratio is greater than 0.5 and at most 1 and the width is less than 3, preferably less than 1, further preferably less than 0.5, yet further preferably less than 0.1, or wherein the median ratio is greater than 0.1 and at most 0.5 and the width is less than 4, preferably less than 1, further preferably less than 0.5, yet further preferably less than 0.1
P11. The powder according to any of the preceding powder embodiments and with the features of embodiment P2, wherein each of the processed plurality of particles comprises a particle according to embodiment R8, and wherein the processed plurality of particles defines a numeric surface area distribution representing a distribution of the total number of particles in the processed plurality and/or in the powder with a ratio of an area of the substantially curved face to a total surface area of the particles.
P12. The powder according to the preceding embodiment, wherein a median ratio of the numeric relative size distribution is greater than 0.8 and a width of the numeric relative size distribution is less than 0.9, preferably less than 0.6, further preferably less than 0.3, yet further preferably less than 0.1, or wherein the median ratio is greater than 0.6 and at most 0.8 and the width is less than 1.3, preferably less than 0.6, further preferably less than 0.3, yet further preferably less than 0.1, or wherein the median ratio is greater than 0.4 and at most 0.6 and the width is less than 2, preferably less than 0.6, further preferably less than 0.3, yet further preferably less than 0.1, or wherein the median ratio is greater than 0.2 and at most 0.5 and the width is less than 2.2, preferably less than 0.6, further preferably less than 0.3, yet further preferably less than 0.1, or wherein the median ratio is greater than 0.1 and at most 0.2 and the width is less than 2.5, preferably less than 0.6, further preferably less than 0.3, yet further preferably less than 0.1.
P13. The powder according to any of the preceding powder embodiments and with the features of embodiment P2, wherein each of the processed plurality of particles comprises a particle according to embodiment R15, and wherein the processed plurality of particles defines a numeric covering area distribution representing a distribution of the total number of particles in the processed plurality and/or in the powder with a ratio of a maximum extension of the polymer in the alignment direction to a maximum extension of the plurality of fibers in the alignment direction.
P14. The powder according to any of the preceding powder embodiments and with the features of embodiment P2, wherein each of the processed plurality of particles comprises a particle according to embodiment R4, and wherein the processed plurality of particles defines a numeric covering area distribution representing a distribution of the total number of particles in the processed plurality and/or in the powder with a ratio of a total surface area of the other component(s) not covered by the shell component to a total surface area of the particles.
P15. The powder according to any of the preceding powder embodiments and with the features of embodiment P2, wherein the processed plurality of particles defines a numeric composition distribution representing a distribution of the total number of particles in the processed plurality and/or in the powder with a number of components in the particles.
P16. The powder according to any of the preceding powder embodiments and with the features of embodiment P2, wherein each of the processed plurality of particles comprises a particle according to embodiment R2, at least one of the processed plurality of particles being derived from a filament according to embodiment F10, wherein the processed plurality of particles defines a numeric composition distribution representing a distribution of the total number of particles in the processed plurality and/or in the powder with a fraction of the total volume occupied by the shell component in the particles.
P17. The powder according to any of the preceding powder embodiments and with the features of embodiment P2, wherein each of the processed plurality of particles comprises a particle according to embodiment R2, at least one of the processed plurality of particles being derived from a filament according to embodiment F29, wherein the processed plurality of particles defines a numeric composition distribution representing a distribution of the total number of particles in the processed plurality and/or in the powder with a fraction of the total volume occupied by the plurality of fibers in the particles.
P18. The powder according to any of the preceding powder embodiments and with the features of embodiment P2, wherein each of the processed plurality of particles comprises a particle according to embodiment R2, at least one of the processed plurality of particles being derived from a filament according to embodiment F23, wherein the processed plurality of particles defines a numeric size distribution representing a distribution of the total number of particles in the processed plurality and/or in the powder with a size of the particles.
P19. The powder according to any of the preceding powder embodiments and with the features of embodiment P2, wherein each of the processed plurality of particles comprises a particle according to embodiment R2, at least one of the processed plurality of particles being derived from a filament according to embodiment F23, wherein the processed plurality of particles defines a numeric size distribution representing a distribution of the total number of particles in the processed plurality and/or in the powder with a maximum length of the plurality of fibers in the particles.
P20. The powder according to any one of the preceding embodiments P9 - P19, wherein the processed plurality of particles defines a volumetric size distribution representing a distribution of the total volume of particles in the processed plurality and/or in the powder with a corresponding characteristic of the processed plurality of particles.

In other words, the processed plurality of particles may define a distribution of the total volume of particles in the processed plurality and/or in the powder with any one of a ratio of a maximum extension of the particles in a direction, at least significantly, parallel to a normal to the substantially flat face and a maximum extension of the particles in a plane, at least significantly, parallel to the substantially flat face, a ratio of an area of the substantially curved face to a total surface area of the particles, a ratio of a maximum extension of the polymer in the alignment direction to a maximum extension of the plurality of fibers in the alignment direction, a ratio of a total surface area of the other component(s) not covered by the shell component to a total surface area of the particles, a number of components in the particles, a fraction of the total volume occupied by the shell component in the particles, a fraction of the total volume occupied by the plurality of fibers in the particles, a size of the particles, or a maximum length of the plurality of fibers in the particles.

Further particularly, the values described above for numeric distributions may hold alternatively, or also additionally, for the corresponding volumetric distributions.
P21. The powder according to any of the preceding powder embodiments and with the features of embodiment P2, wherein each of the processed plurality of particles comprises a particle according to embodiment R2, wherein the processed plurality of particles defines a volumetric size distribution representing a distribution of the total volume of particles in the processed plurality and/or in the powder with a length of the particles.
P22. The powder according to the preceding embodiment, wherein a width of the volumetric size distribution is at least as large as 1, and wherein, when the median length is in the range defined by 40 µm and 80 µm, the width is at most as large as 2.5, preferably as large as 4, or when the median length is in the range defined by 5 µm and 40 µm, the width is at most as large as 2.5, preferably as large as 4, or when the median length is in the range defined by 80 µm and 150 µm, the width is at most as large as 4, preferably as large as 6, or when the median length is in the range defined by 150 µm and 500 µm, the width is at most as large as 6.
PM14. The method according to any of the preceding powder manufacture embodiments, wherein the powder comprises a powder according to any of the preceding powder embodiments.

Below powder manufacturing system embodiments will be discussed. These are abbreviated by the letters "PS" followed by a number. Whenever reference is herein made to the "powder manufacturing system embodiments", the following embodiments are meant.
PS1. A system for manufacturing a powder, wherein the powder comprises a processed plurality of particles, wherein the system is configured to cut at least one or a plurality of filaments, wherein each of the at least one or the plurality of filaments comprises a filament according to any of the preceding filament embodiments.
PS2. The system according to the preceding embodiment, wherein the system comprises a cutting component comprising any of a blade, a water jet, or a laser.
PS3. The system according to any of the preceding system embodiments, wherein the system comprises a perforated plate comprising at least one channel, each of the at least one channel configured to allow at least one filament through, each of the at least one channel comprising a feed end through which the at least one filament can enter the channel and a cutting end corresponding to an end out of which the at least one filament can exit the channel, wherein the feed end lies in a feed plane of the perforated plate, and the cutting end lies in a cutting plane of the perforated plane.
PS4. The system according to the preceding embodiment, wherein cutting the filament comprises guiding the filament through one of the at least one channel.
PS5. The system according to the preceding embodiment, wherein the system is configured to cut a section of the filament extending out of the channel at the cutting end.
PS6. The system according to any of the preceding system embodiments, wherein the system comprises a furnace.
PS7. The system according to the preceding embodiment, wherein the system is configured to guide each of the plurality of cut sections of the at least one or the plurality of filaments through the furnace.
PS8. The system according to the preceding embodiment, wherein the system comprises a conveyor belt configured to pass through the furnace, wherein the conveyor belt comprises a substantially flat surface.
PS9. The system according to the preceding embodiment, wherein the system is configured to disperse the plurality of cut sections on the flat surface of the conveyor belt passing through the furnace.
PS10. The system according to any of the 3 preceding embodiments, wherein a temperature of the furnace is greater than a melting point of any of the plurality of cut sections.
PS11. The system according to the preceding embodiment, wherein at least one of the plurality of cut sections comprises a polymer, and wherein the temperature of the furnace is less than a decomposition temperature of the at least one cut section.
PS12. The system according to any of the preceding powder manufacturing system embodiments, wherein the system further comprises a filament manufacturing system according to any of the preceding filament manufacturing system embodiments, or at least one component thereof.

Below use embodiments will be discussed. These are abbreviated by the letter "U" followed by a number. Whenever reference is herein made to the "use embodiments", the following embodiments are meant.
U1. A use of the powder according to any of the preceding powder embodiments in an additive manufacturing process.
U2. The use according to the preceding embodiment, wherein the additive manufacturing process is a powder bed-based manufacturing process.
   In particular, a power bed-based manufacturing process may be understood to comprise the steps of spreading out powder over a bed and locally heating the powder to create local adhesion, thus creating an object layer by layer.
U3. The use according to any of the 2 preceding embodiments, wherein the additive manufacturing process comprises any of Selective Laser Sintering (SLS), Multijet Fusion (MJF), High Speed Sintering (HSS), or Selective Absorption Fusion (SAF).
U4. A use of the powder according to any of the preceding powder embodiments for drug delivery.
U5. A use of the powder according to any of the preceding powder embodiments for powder coating.
U6. A use of the powder according to any of the preceding powder embodiments for manufacturing an expanded polymer such as expanded polystyrene.

Below object embodiments will be discussed. These are abbreviated by the letter "O" followed by a number. Whenever reference is herein made to the "object embodiments", the following embodiments are meant.
O1. An object produced by an additive manufacturing process, wherein the additive manufacturing process uses a powder according to any of the preceding powder embodiments.
O2. The object according to the preceding embodiment, wherein the additive manufacturing process is a powder bed-based manufacturing process.
O3. The object according to any of the 2 preceding embodiments, wherein the object comprises a network of open and/or closed cells.
   The phrase "and/or" may be understood to mean that the object may comprise a network of only open cells, of only closed cells, or of both open and closed cells.
O4. The object according to the preceding embodiment, wherein at least one of the closed (open) cells comprises a first of the plurality of components encased fully (only partially) by a second of the plurality of components.
O5. The object according to the preceding embodiment, wherein
   the powder comprises the features of embodiment P1, and wherein at least one of the at least one or the plurality of filaments comprises the features of embodiment F4, or
   the powder comprises the features of embodiment P2, wherein the particle comprises the features of embodiment R2, wherein the filament comprises the features of embodiment F4,
   wherein the second component comprises the shell component.
O6. The object according to the penultimate embodiment, wherein
   the powder comprises the features of embodiment P1, and wherein at least one of the at least one or the plurality of filaments comprises the features of embodiment F22, or
   the powder comprises the features of embodiment P2, wherein the particle comprises the features of embodiment R2, wherein the filament comprises the features of embodiment F22,
   wherein the second component comprises the polymer.
O7. The object according to embodiment O4, optionally with the features of the preceding embodiment, wherein
   the powder comprises the features of embodiment P1, and wherein at least one of the at least one or the plurality of filaments comprises the features of embodiment F20, or
   the powder comprises the features of embodiment P2, wherein the particle comprises the features of embodiment R2, wherein the filament comprises the features of embodiment F20,
   wherein the first component comprises the plurality of fibers.

The powder as described above may depict a material efficiency in the laser sintering process of at least 90%, instead of approx. 50% for PA11- and PA12-based powders. Further, it may allow increase in consistency of processability into molded parts with the same properties even after several object-manufacturing cycles with the same powder (for example, characterized by change in stiffness, strength, elongation at break of less than 10% after 5 cycles).

The powder may incorporate sustainable materials, thereby improving the CO₂ balance and material availability. The main polymers used may comprise any of recyclates (mechanically recycled polymers from post-industrial and post-consumer streams), bio-based polymers, and innovative recycling processes (enzymatically recycled/recyclable polymers). The use of sustainable materials may also extend to any components used to achieve desired material properties such as increased material strength or fire-retardant capability.

It may be advantageous for the powder according to the present invention to provide added value compared to the PA12 powder currently in use and the parts manufactured from it. For example, added value can lie in increased material efficiency. Added value can also lie in improved mechanical properties of the molded parts produced using the powder as described herein. Typical parameters that may be used to characterize the powder may comprise, for example, porosity (that may advantageously be < 1%), elongation at break in xy-plane (that may advantageously be >16 % compared to EOS PA2200 at 18 %), elongation at break in z-plane (that may advantageously be > 4 % compared to EOS PA2200 at 4 %), strength in xy-plane (that may advantageously be > 40 MPa compared to EOS PA2200 at 48 MPa), or strength in z-plane (that may advantageously be > 40 MPa compared to EOS PA2200 at 42 MPa).

As described above, the manufacture of the powder according to the present invention may comprise compounding (or mixing) of the various components, multi-component melt spinning of filaments with subsequent assembling, for example, into a yarn, cutting of the filaments into powder particles (cylindrical), melting, at least in part, of the particles, sieving, addition of anti-caking agents, and finally processing of the powder into moulded parts using SLS.

As described above, the powder may comprise particles with multiple components that may be chosen so as to optimize an additive manufacturing process using the powder. For example, the shell component may be optimized with respect to melting and suitability for use in a laser sintering process, whereas a core component may be optimized to improve material strength of objects fabricated using the powder such as by using fibers.

The reduced material efficiency of typical PBF processes may be due to the design of PA11 and P12 powders as "unregulated" variants to meet the sintering and mechanical strength requirements of the processes. By meeting these requirements through the use of multiple components, the powder of the present invention may allow use of more chemically stable materials, thus increasing material efficiency and reducing carbon footprint.

The multi-component particles of the present invention may allow using materials not previously suitable for PBF at least as core material and, possibly, as both core and shell material. The use of recyclates may, for example, be envisaged. Additionally, bio-based and bio-degradable polymers may be used allowing for improved sustainability. Use of enzymatically recycled polymers from organic waste with the help of microorganisms and enzymes may allow for sustainable upcycling.

Generally, the present technology may allow reducing the CO₂ footprint of PBF powders through the presence of multi-component particles.

Material efficiency of PBF processes may also be increased, reducing manufacturing complexity of correspondingly produced molded parts. In addition, the manufacturing process for multi-component particles may further reduce complexity as spinning, cutting, and melting may be simpler when scaled up sufficiently.

The process for powder production, as described herein, may allow a more efficient way of producing new types of powder for PBF. For example, the same shell component may be used with different core components so that the SLS parameters may also be adapted with reduced effort.

Further, the powder of the present invention may allow for more efficient sintering as it may be possible to match the viscosities of the shell component to the core component(s). Lowering the viscosity and the associated processing temperature of the shell component below the corresponding values of the core component(s) may, for example, enable more energy-efficient sintering and more sustainable process control.

As described above, embodiments of the present technology relate to producing powders from multi-component particles using the intermediate step of melt spinning. The particle may comprise two (or three) components that may fulfill different functions and that may be developed for producing powder for PBF.

### Brief Description of Figures

- Figure 1a: depicts a known system for manufacturing a filament;
- Figure 1b: depicts a zoomed-in view of a multiple die of the system;
- Figure 1c: depicts a cross-section of a filament comprising two components;
- Figure 2: depicts an embodiment of a method for manufacturing a powder according to the present invention;
- Figure 3: depicts an embodiment of a system for cutting filaments according to the present invention;
- Figure 4a: depicts a cross-sectional view of a perforated plate according to the present invention;
- Figure 4b: depicts a side-view of filaments fed into a perforated plate according to the present invention;
- Figure 5a: depicts a cut particle derived from a filament with two components;
- Figure 5b: depicts a cut particle derived from a filament comprising fibers;
- Figure 5c: depicts a microscopy image of a cut particle derived from a filament comprising fibers;
- Figure 5d: depicts an SEM image of cut particles;
- Figure 6: depicts melting of cut particles according to the present invention;
- Figure 7a: depicts a particle resulting from melting with the shell component fully encasing the core;
- Figure 7b: depicts a particle resulting from melting with the shell component partially encasing the core;
- Figure 7c: depicts an SEM image of particles resulting from melting;
- Figure 8a: depicts an SEM image of a well-known powder comprising fibers;
- Figure 8b: depicts an SEM image of particles comprising fibers resulting from melting according to the present invention;
- Figure 9: depicts a microscopy image of a particle comprising fibers resulting from melting according to the present invention;
- Figure 10a: depicts a laser sintering process using a powder according to the present invention; and
- Figure 10b: depicts an object resulting from laser sintering of a powder according to the present invention.

### Detailed Description of Figures

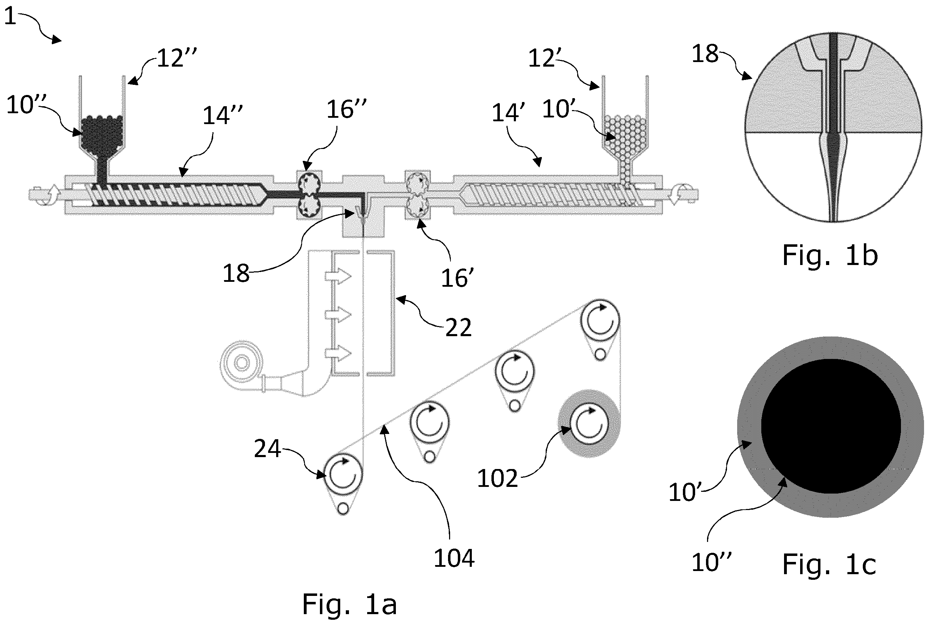

Figure 1a depicts a well-known system 1 of the prior art for manufacturing a filament 104. Such a system 1 is depicted, for example, in Jakubowski et. al., *Melt-Spun Photoluminescent Polymer Optical Fibers for Color-Tunable Textile Illumination,* Materials 14(7):1740. The skilled person understands that generally such a system may produce a plurality of filaments 104 simultaneously. However, for the present discussion, it suffices to refer to only one filament 104. It may be further understood that the one filament 104 referred to, in the following, may correspond to any one of the plurality of filaments 104 produced by the system 1.

The filament 104 manufactured by using the filament manufacturing system 1 may, in particular, comprise a plurality of components. For example, the filament 104 depicted in Figure 1 comprises two components 10' and 10". Generally, however, the filament manufacturing system 1 may be used for manufacturing filaments with any number of components. Each of a majority, i.e., at least half, of the plurality of components may preferably comprise a thermoplastic polymer.

The filament manufacturing system 1 may, in particular, be used for manufacturing a filament 104 with a so-called shell-core configuration, viz., one of the plurality of components, component 10' in Figure 1, may encase at least partially, or completely as in the case depicted in Figure 1, all the other components, component 10" in Figure 1. The component 10' may be referred to as a shell component whereas the other components may make up a core of the filament 104 and may be referred to as core components.

In the following, manufacture of the filament 104 will be described considering two components 10' and 10" comprised in the filament 104 as depicted in Figure 1. However, the skilled person may appreciate that similar considerations apply, *mutatis mutandis,* to manufacturing filaments 104 with a greater number of components.

Filament 104 may be manufactured by co-extrusion of the components 10', 10". To that end, the filament manufacturing system 1 may comprise extrudes 14' and 14" configured to extrude the components 10' and 10" respectively. The extruders 14', 14" have been depicted in Figure 1 to comprise screw extruders. However, any suitable kind of extruder may be used. Each of the extruders 14', 14" may be connected to a feed hopper 12', 12" that may store pellets of components 10', 10" that are to be extruded. By arranging the feed hopper 12', 12" vertically over an inlet of the extruder 14', 14", the pellets of component 10', 10" may be provided to the extruder 14', 14" more efficiently.

A diameter of the filament 104 may be based, at least in part, on a diameter of the extruders 14', 14". For example, a diameter of extruder 14' may be 16 mm, while that of extruder 14" may be 20 mm.

The extruders 14', 14" may each be connected to melt pumps 16', 16" that may allow handling and control of the extruded component 10', 10". Extruded components 10', 10" may then enter a spin pack 18 that may be used to align the extruded component 10', 10" to form the filament 104.

A zoomed-in view of the spin pack 18 is depicted in Figure 1b that shows a multiple die used to combine components 10' and 10" such that 10" forms the core and 10' forms the shell of the filament 104.

The extruded components 10', 10" exiting the spin pack 18 may subsequently pass through a quenching chamber 22 where they may be cooled and solidified to form the filament 104 which may be wound over a godet 24 and a spool 102.

A cross-section of the filament 104 as formed by the filament manufacturing system 1 is depicted in Figure 1c. As depicted, a central core of the filament 104 comprises the component 10" while an outer shell comprises the component 10'.

While the filament manufacturing system 1 has been depicted in Figure 1a to be used for manufacture of the filament 104 with a shell-core configuration where the shell component 10' and the core component 10" are aligned along a common central axis, by using an appropriate die in spin pack 18 other configurations may also be attained such as an islands-in-sea configuration where the core component 10" may be aligned along a different axis parallel to a central axis of the shell component 10'. Further exemplarily, the core may comprise more than one component 10", such as two, or three components 10". Each of the more than one core components 10" may be aligned co-axially with the shell component 10' forming a multi-layer structure, the multiple layers aligned radially. Alternatively, the filament 104 with more than one core components 10" may be manufactured in an islands-in-sea configuration such that at least two of the core components 10" are aligned along different axis, each axis being parallel to the central axis of the shell component 10'.

The filament 104 comprising the plurality of components may be of particular advantage in manufacturing a powder for use in an additive manufacturing process. The powder may alternatively, or additionally, be advantageously used in other fields of application such as powder coating, drug delivery, rotational molding, as an ingredient for paints and coatings, or in manufacture of expanded polymers. The skilled person may appreciate that the above list is to be considered only exemplary but not limiting of the possible application of a powder derived from the filament 104.

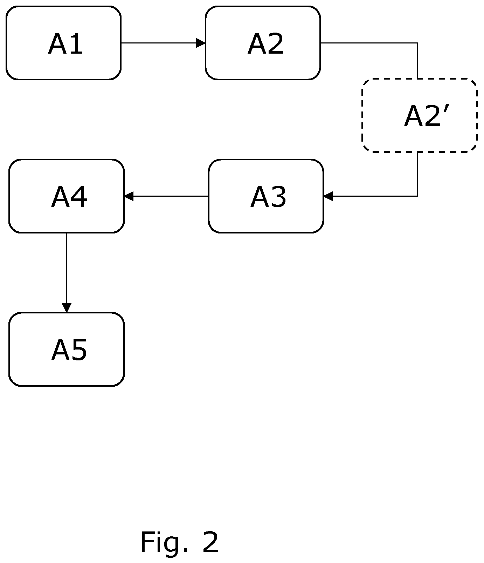

Figure 2 depicts an embodiment of a method for producing a powder according to the present invention. The powder may comprise a processed plurality of particles. The processed plurality of particles may each be produced from each of a plurality of cut particles. In other words, one cut particle may result in one processed particle.

The processed plurality of particles may constitute a majority, i.e., at least 50%, of the powder. For example, the powder may consist of a plurality of particles and the processed plurality may comprise at least 50% of the plurality of particles. Alternatively, or additionally, the processed plurality may comprise at least 60%, more preferably at least 65% of the plurality of particles. In some embodiments, the processed plurality of particles may constitute a majority by weight and/or by volume of the powder.

Each of the plurality of cut particles may correspond to a section (i.e., a cut portion) of a filament such as the filament 104 manufactured as depicted in Figure 1. Embodiments of the present invention relate to production of the processed plurality of particles and may comprise production of the plurality of cut particles.

However, it may be understood that embodiments of the present invention may relate only to producing the processed plurality of particles from cut particles but not to the production of the cut particles, or only to production of some of the plurality of cut particles. In other words, in some embodiments, at least some of the steps of the method, as depicted in Figure 2, may be omitted.

Each of the plurality of cut particles may comprise a polymer. For example, the polymer may comprise any of a polyamide, a polyethylene, a polypropylene, a polyetherketone, a polyoxymethylene acetal, a polytetrafluoroethylene, a polyphenylene sulfide, a polybutylene terephthalate, an aliphatic polyamide, polyamide 6, polyamide 6-6, polyamide 6-10, polyamide 6-12, polyamide 10, polyamide 10-10, polyamide 10-12, polyamide 11, polyamide 12, polycaprolactone, polylactic acid, a low-density polyethylene, a medium-density polyethylene, or a high-density polyethylene. As a result, each of the processed plurality of particles may comprise a polymer, the polymer being, at least substantially, identical to the polymer comprised by the corresponding cut particle.

Producing the plurality of cut particles may comprise cutting one or more filaments. Any, preferably each, of the one or more filaments may comprise a polymer. For example, the polymer may comprise any of a polyamide, a polyethylene, a polypropylene, a polyetherketone, a polyoxymethylene acetal, a polytetrafluoroethylene, a polyphenylene sulfide, a polybutylene terephthalate, an aliphatic polyamide, polyamide 6, polyamide 6-6, polyamide 6-10, polyamide 6-12, polyamide 10, polyamide 10-10, polyamide 10-12, polyamide 11, polyamide 12, polycaprolactone, polylactic acid, a low-density polyethylene, a medium-density polyethylene, or a high-density polyethylene. As a result, each of the cut plurality of pre-cursor particles, as well as each of the processed plurality of particles may comprise a polymer, as described above.

In a first step, A1, a filament may be fed into a channel. The channel may comprise a substantially linear channel. Alternatively, or additionally, a plurality of filaments may be fed into the channel. Yet further alternatively, or additionally, and preferably, a first plurality of filaments, that may be referred to as a first guided plurality, may be fed into a first channel, and a second plurality of filaments, that may be referred to as a second guided plurality, may be fed into a second channel. In other words, a plurality of channels may be available, each of the plurality of channels configured to allow a plurality of filaments through and a plurality of filaments may be fed through each of at least some of the plurality of channels. Each of the plurality of channels may comprise a substantially linear channel.

Feeding a single filament may be of advantage in allowing better control in guiding the filament through the channel. However, the number of cut particles produced may be reduced, decreasing an overall throughput of the process. Feeding a large number of filaments may allow for increase in throughput but may be difficult to guide through the channel. It may be of advantage to feed a plurality of filaments through any one of the plurality of channels such that a fraction of the volume of the channel occupied by the plurality of filaments is at most 60%, preferably at most 50%, further preferably at most 30%. A fraction below 30% may be of particular advantage in achieving optimum cutting results, as described further below.

The plurality of channels may be comprised in a perforated plate, for example. An end of the channel into which the one or more filaments may be inserted into the channel may be referred to as a feed end of the channel. The feed ends of each of the plurality of channels may lie in a plane of the perforated plate, that may be referred to as a feed plane of the perforated plate.

The one or more filaments may exit the corresponding channel at another end of the channel, that may be referred to as a cutting end of the channel. In other words, each of the one or more filaments may enter a channel at the feed end of the channel, and exit the channel at the cutting end of the channel. The cutting ends of each of the plurality of channels may lie in a plane of the perforated plate, that may be referred to as a cutting plane of the perforated plate.

Generally, the plurality of channels may comprise holes bored through the perforated plate that may extend from one face of the perforated plate to an opposite face of the perforated plate.

The plurality of channels may or may not be parallel to each other. Further, the plurality of channels may or may not be arranged such that the feed end and the cutting end of any channel are directly opposite each other. The plurality of channels may be arranged in one or more circles around a common center. In other words, the feed ends and/or the cutting ends of the plurality of channels may be arranged in one or more circles around a common center. Note that the common center of the feed ends may not be coaxial with the common center of the cutting ends. Alternatively, the plurality of channels may be arranged eccentrically.

Any of the plurality of filaments guided through one channel may be bundled together to form a bundled plurality of filaments. In other words, any one channel may hold one or more bundles of filaments and any number (including zero) of unbundled filaments. Bundling may be of advantage in improving an ability to guide the bundled plurality of filaments through the channel. Bundling together may comprise any of placing, collecting, or combining the plurality of filaments into a single group or cluster.

Bundling together may further comprise twisting together the plurality of filaments. A plurality of bundled pluralities of filaments may be further twisted together before feeding them into a channel.

The plurality of filaments fed into one channel may comprise filaments of, at least significantly, identical diameters. Alternatively, the plurality of filaments fed into one channel may comprise filaments of different diameters. Feeding filaments of, at least significantly, identical diameters may result in the plurality of pre-cursor particles having a narrow size distribution.

The plurality of filaments fed into one channel may comprise filaments of, at least significantly, identical compositions. Alternatively, the plurality of filaments fed into one channel may comprise filaments of different compositions. For example, half of the plurality of filaments may comprise one composition, while the other half may comprise another composition. Further particularly, half of the plurality of filaments may comprise filaments 104 comprising two components 10' and 10" as described above, whereas another half may comprise filaments 104 comprising three components. As may be appreciated, any suitable combination of different compositions may be used.

In a next step, A2, the one or more filaments may be cut by means, at least in part, of a blade. The blade may, for example, slide over the cutting end, thus cutting the section of the one or more filaments extending beyond the cutting end. In embodiments of the present invention, a plurality of blades may be employed for cutting. In the following, reference will be made to cutting of the one or more filaments by means, at least in part, of a blade. The blade may be understood to, then, comprise any one of the plurality of blades.

The method may comprise cutting the one or more filaments periodically at a cutting frequency. In other words, the blade may be slid over the cutting end periodically with the cutting frequency. For example, each of the plurality of blades may be attached to a cutting head, that may be configured to rotate about an axis, at least significantly, perpendicular to the cutting plane of the perforated plate. The cutting frequency may be based, at least in part, on a frequency of rotation of the cutting head. In particular, the cutting frequency may be proportional to the frequency of rotation. As may be appreciated, the cutting frequency may, at least significantly, be identical to the frequency of rotation in so far as the cutting frequency relates to cutting of the one or more filaments by a defined blade.

The one or more filaments may be guided through any of the channels by means, at least in part, of an electrostatic field. Alternatively, or additionally, a fluid flow may be used, at least in part, for guiding. The fluid may comprise any of air, nitrogen, or an inert gas. The fluid flow may be established by means of a pressure difference. In particular, a pressure at the feed end may be greater than a pressure at the cutting end of a channel, such that the one or more filaments are "sucked" towards the cutting end. The creation of a relative negative pressure at the cutting end may be of advantage in reducing a turbulence in the fluid allowing for better reproducibility and higher efficiency in the volume of fluid needed for the process.

The one or more filaments may be guided through any of the channels at a guiding speed. As may be appreciated by the skilled person, the guiding speed may depend, at least in part, on the pressure difference between the two ends of the channel, on dimensions of the channel, on the fraction of the volume of the channel occupied by the one or more filaments, and on a speed at which the one or more filaments may be fed into the channel. The feed rate into the channel may be controlled, for example, by controlling a rotational speed of a spool over which the one or more filaments may be wound.

An extension of the cut section, or equivalently the cut particle, in a direction, at least significantly, perpendicular to the cutting direction, that may be considered a length of the section, or of the cut particle, may be based, at least in part, on any of the cutting frequency or the guiding speed. In some embodiments, the cutting frequency and/or the guiding speed may be chosen to produce cut particles of a pre-defined length.

In some embodiments, the one or more filaments may comprise a partially or fully drawn yarn. A partially or fully drawn yarn may be stiffer than an undrawn yarn and may, thus, be easier to cut. The drawing of the yarn may be, at least partially, reversed by heating the filament, or the cut sections thereof. The heating of the sections may, thus, allow producing particles of different extensions. Thus, in some embodiments, the method may comprise an auxiliary step, A2', comprising heating the cut sections to a temperature below the melting point of the filament(s), or of the cut section(s) thereof. For example, a filament may be stretched to three times its length, and particles of length 100 µm may be cut from it. By heating the cut particles, the length may be reduced to ~ 30 µm. As may be appreciated, the decrease in length may be accompanied by an increase in at least one of the other dimensions as the total mass of the cut particle is conserved.

The plurality of cut particles obtained at the end of steps A2/A2' may be used to produce the processed plurality of particles, as described above. As may be appreciated by the skilled person, the cut particles may comprise a generally prismatic, such as a generally cylindrical shape, as described above. A cross-section of the generally prismatic shape perpendicular to a length of the generally prismatic shape (i.e., along the length of the cut particle, length being described as above) may, however, not necessarily correspond to a circle. If the cut particle is cut from a cylindrical filament, the cross-section may be substantially circular. However, sections may alternatively, or additionally, be cut from a film, in which case the cross-section may depart from substantial circularity.

A third step, A3, may comprise arranging the plurality of cut particles, corresponding to the sections of the one or more filaments as described above, possibly after heating as described above, on a conveyor belt. The conveyor belt may comprise a substantially flat surface over which the plurality of cut particles may be arranged.

The step A3 may further comprise realizing a desired areal number density of the cut particles on the conveyor belt. In particular, the desired areal number density may be chosen such that agglomeration of the cut particles, or at least of a fraction thereof, is reduced. For example, it may be of advantage to reduce agglomeration of large (for example, greater than ~ 30 µm) cut particles.

The arrangement on the conveyor belt may, advantageously, be carried out by means, at least in part, of a sieve, such as a vibrating sieve. In particular, cut particles that are smaller than a size of a mesh of the sieve may cluster on the conveyor belt. However, during a subsequent melting phase, as described below, they may melt together to form a larger particle or may decompose due to the high temperature. As may be appreciated by the skilled person, particles of size less than ~ 10 µm may not be suitable for use in additive manufacturing processes. By reducing, due to agglomeration, a number of small particles, as described above, embodiments of the present technology may, thus, also improve a utility of the resulting powder for additive manufacturing processes.

In a fourth step, A4, the plurality of cut particles may be conveyed through a furnace. A temperature of the furnace may be greater than a melting point of any of the plurality of cut particles. The temperature of the furnace may, further, be lower than a decomposition temperature of any of the plurality of cut particles that may each comprise a polymer, as described above.

A result of conveying the plurality of cut particles through the furnace may be a melting, at least in part, of at least one, preferably each, of the plurality of cut particles. As each of the plurality of cut particles is arranged on the flat surface of the conveyor belt, at least some, preferably a majority, of the plurality of, at least partially, melted cut particles may comprise a substantially flat face. A further result of melting or sintering, at least in part, each of the plurality of cut particles may be a smoothening of a surface of at least some, preferably each, of the plurality of cut particles.

Smoothening may be understood to comprise, for example, a decrease in an average surface roughness of at least some of the plurality of cut particles. Smoothening may also comprise rounding of edges and reduction of cutting residue/artifacts like burrs or other extensions of the cut particle which, for example, do not conform with its generally prismatic shape.

The melting, at least in part, of the plurality of cut particles may further result in a change in a degree of crystallinity of at least some, preferably each, of the plurality of cut particles.

In a fifth step, A5, the plurality of, at least partially, melted cut particles may be cooled to obtain each of the processed plurality of particles.

In some of the cut particles, the melting, at least in part, of the cut particles may lead to formation of generally cylindrical particles that are substantially collapsed along the length of the cylinder. Thus, the processed plurality of particles may comprise particles that are generally cylindrical but have a ratio of a maximum length to a maximum width less than 1, preferably less than 0.8, further preferably less than 0.6, even more preferably less than 0.5.

Alternatively, melting, at least in part, of the cut particles, as described above, may produce a curved face overlaid over a substantially flat face in at least some of the processed plurality of particles. The curved face may comprise a finite, non-zero radius of curvature in at least two, preferably exactly two, dimensions. In other words, the radius of curvature may be significantly different from both zero and infinity in at least two dimensions. The non-zero radii of curvature in the at least two dimensions may or may not be, at least significantly, identical. The at least some of the processed plurality of particles, so produced, may further be characterized as comprising a shape generally as that of a frustum of a sphere.

The above shapes of at least some of the processed plurality of particles may lend surprising characteristics to the powder comprising the processed plurality of particles. In particular, the powder may exhibit relatively high bulk density, a good Hausner factor value, such as a Hausner factor less than 1.3, preferably less than 1.2, further preferably less than 1.1, and favorable layer application behavior, for example, in a laser sintering process. Favorable layer application behavior may be understood to comprise reduction in agglomeration of particles in the powder during the process of applying a layer (for additive manufacturing) or in a number of visible grooves.

Thus, embodiments of the present technology allow manufacturing a powder for use in an additive manufacturing process, the powder comprising a plurality of particles, of which a processed plurality may comprise particles produced as described above.

In the process of cutting the one or more filaments, as described above, the blade may get heated. The heated blade may result in melting of the filament, at least partly, during cutting. As a result, the cut made by the blade may not be ideal. The method according to the present invention may further comprise maintaining a temperature of the blade below a pre-defined threshold/temperature. The pre-defined temperature may be chosen so as to minimize melting, at least in part, of the filament during cutting.

The maintenance of the temperature of the blade below the pre-defined threshold may be achieved by several means. For example, the perforated plate may comprise a thermally conductive material and may comprise one or more thermal channels through which a thermal fluid may be driven. The thermal channel(s) may be arranged so that the thermal fluid comes in thermal contact with the cutting plane of the perforated plate. For example, the thermal channel(s) may comprise U-shaped channel(s) with the bend of the U being arranged, at least significantly, directly underneath the cutting plane.

The thermal fluid may comprise any fluid that may absorb heat, at least indirectly, from the blade. For example, via the thermal channel, it may be driven between a heat sink and the cutting plane. The thermal fluid may absorb heat from the cutting plane and release it into the heat sink, thereby cooling down.

Alternatively, or additionally, the cutting head to which the blade is attached may be provided with a cooling mechanism similar, for example, to the mechanism described above. Alternatively, or additionally, the one or more filaments may be cooled before being fed through the one or more channels. Alternatively, or additionally, the fluid used to guide the one or more filaments through the one or more channels may be cooled. Alternatively, or additionally, a cold gas may be blown over the blade in a direction, at least significantly, parallel/anti-parallel to the cutting direction. Alternatively, or additionally, a cold gas may be blown over the blade via one or more gas channels in the perforated plate.

Another relevant aspect of the process as described above may be a decrease over time in a sharpness of the blade. To maintain, at least as much as possible, the sharpness of the blade, the method may further comprise choosing a material of the blade and of the perforated plate appropriately.

For example, the material of the perforated plate may be chosen to be harder than the material of the blade, and the blade may be slid over the cutting end such that contact with a defined pressure is established between at least an edge of the blade and the perforated plate. The contact may, thus, sharpen at least the edge of the blade during the cutting.

Alternatively, if a softer material is chosen for the perforated plate, the material may be chosen such that a coefficient of friction between at least an edge of the blade and the perforated plate is low. Thus, wearing as well as heating of the blade may be, advantageously, reduced. For example, the blade may be coated with a coating comprising a Diamond-like carbon (DLC) material, TiN, TiAlN, or AlTiSiN.

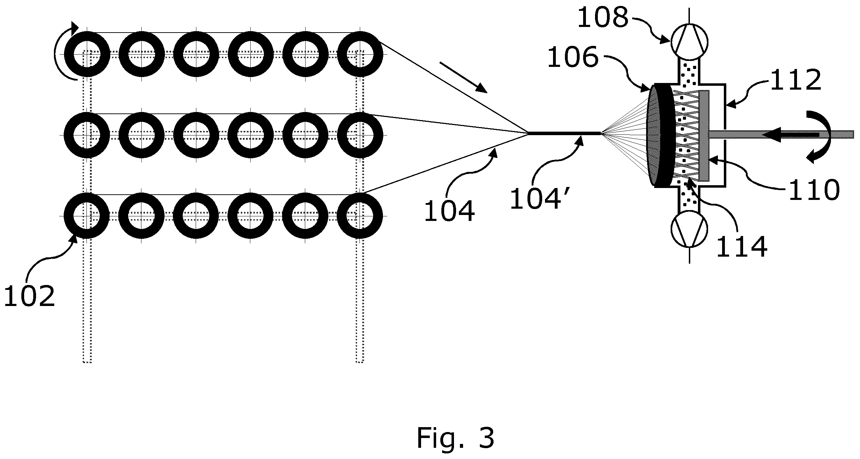

Figure 3 depicts a creel comprising a plurality of spools 102. The filament 104, as described above, may be wrapped around each spool 102. Each spool 102 may be configured to rotate about an axis such that the filament 104 wrapped around the spool 102 may be unwound. A speed of rotation of the spool 102 may be controlled, for example, to control a speed at which the filament 104 is unwound, and thus to control a speed at which the filament 104 is fed into a perforated plate 106. The filaments 104 from a plurality of spools 102 may be bundled, twisted, and/or multiplexed together, as described further below, into a bundled plurality of filaments 104' before guiding the bundled plurality to the perforated plate 106.

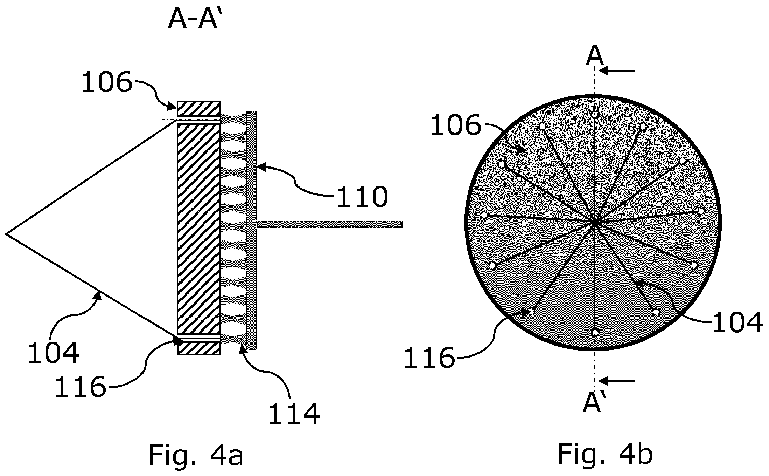

The perforated plate 106 may comprise a plurality of channels 116 (as depicted more clearly in Figures 4a and 4b) through which a subset of the set of the plurality of filaments 104' may be guided. In other words, at least some of the plurality of filaments 104' may be guided through one of the plurality of channels 116 and at least some other of the plurality of filaments 104' may be guided through another of the plurality of channels 116.

The channels 116 are depicted in Figures 4a and 4b as being linear and, at least substantially, straight such that an end through which a filament 104 (or a plurality thereof) is fed into the channel 116, that may be referred to as a feed end, is directly horizontally opposite an end through which the filament 104 exits the channel, that may be referred to as a cutting end of the channel. However, in some embodiments of the present invention, the channel may not be horizontally straight such that the feed and the cutting ends are not, at least significantly, directly opposite each other.

Further, the channels 116 are depicted as comprising a concentric arrangement - such arrangement may require alignment, thus making fabrication of the perforated plate 106 complex. Alternatively, the channels 116 may be fabricated eccentric, allowing simpler fabrication of the perforated plate 106.

Figure 3 further depicts a cutting chamber 112 in which the filament 104 is cut. In particular, a section of the filament 104 extending out of the cutting end of a channel 116 may be cut. The cutting ends of all the channels 116 may be comprised in a plane of the perforated plate 106, that may be referred to as a cutting plane.

One or more blades 114, attached to a cutting head 110, may be slid over the cutting plane, effecting cuts of the plurality of filaments 104' guided through the plurality of channels 116. In particular, the one or more blades 114 may be rotated along an axis such that sections of the filament(s) 104 may be cut, at least significantly, perpendicular to a length of the filament(s) 104, the cut sections corresponding to the cut particles as described above.

The cutting head 110 may be pushed against the cutting plane of the perforated plate 106 with a defined force so as to improve an efficiency of the cutting process. The defined force may be in the range defined by 0.1 and 500, preferably by 0.15 and 400, further preferably by 350, yet further preferably by 1 and 50 N/blade, for example. In other words, the defined force may depend on the number of blades attached to the cutting head 110 and may lie in the ranges defined above adjusted suitably for the number of blades attached to the cutting head 110.

A low-pressure region may be established in the cutting chamber 112 by means of a vacuum pump 108. For example, a pressure difference between the cutting chamber and an external environment around the cutting chamber may be in the range defined by 0.1 and 1 bar. As a consequence of the low pressure, filaments 104 may be "sucked" into the channels 116 towards the cutting plane with the help, for example, of air. As described above, other suitable fluids may be alternatively, or additionally, used. Establishing the low-pressure region within the cutting chamber 112 may be of advantage in reducing a turbulence of the air, allowing better reproducibility of the process.

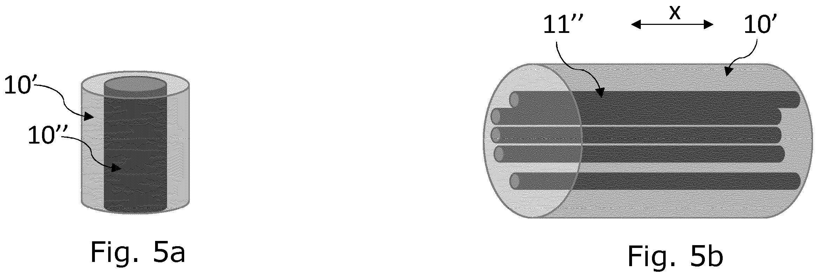

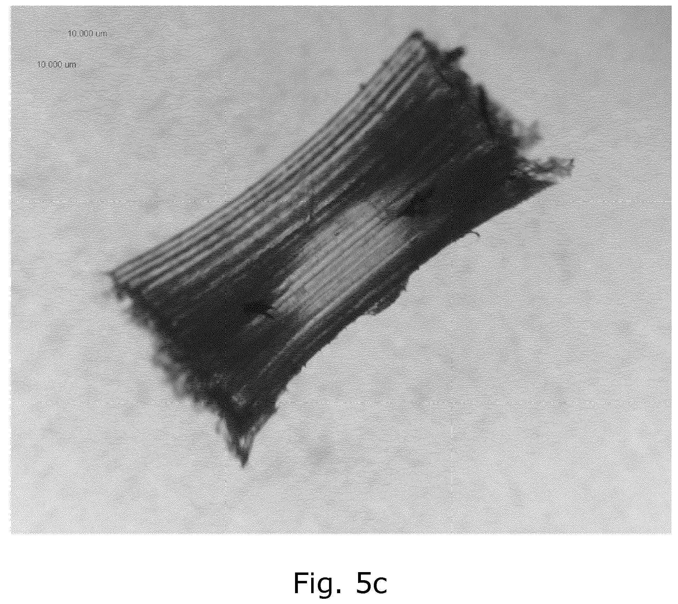

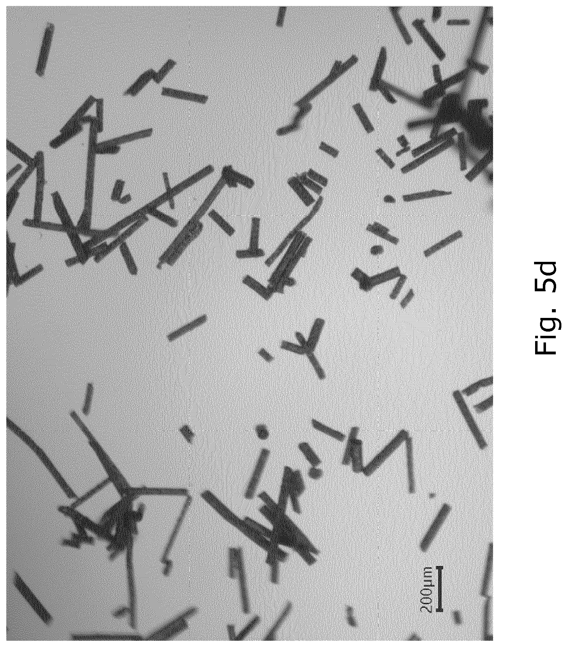

Figure 5 depicts different aspects of the cut particles obtained by cutting the filaments 104 as described above. In particular, Figure 5a depicts a cut particle that may be derived from the filament 104 manufactured as depicted in Figure 1. The cut particle of Figure 5a may comprise a generally cylindrical shape with a shell-core configuration comprising an outer cylinder comprising component 10' and an inner cylinder comprising component 10".

Figure 5b depicts a cut particle derived from a filament 104 that may comprise, as one (or some) of the plurality of components, a plurality of fibers 11". It may be of advantage to reinforce the filament 104 produced as described above along a certain direction. By incorporating the plurality of fibers 11" into the filament 104, a reinforcement along a direction of alignment of the plurality of fibers 11" may be achieved.

The filament 104 comprising the plurality of fibers 11" may be manufactured, for example, by aligning the plurality of fibers 11" in a defined direction, that may be referred to as an alignment direction, and coating the plurality of fibers 11" with a polymer, the polymer comprising another one of the plurality of components. The alignment direction corresponds, for example, to the direction indicated by "x" in Figure 5b and may correspond, at least significantly, to a direction along a length of the filament 104 (length being defined as a direction in which an extension of the filament 104 is, at least significantly, greater than an extension in any of the other two dimensions). Addition of the plurality of fibers 11" to the polymer may, in particular, be of advantage in increasing a strength of the resulting cut particle in the alignment direction.

Coating the aligned fibers 11" with the polymer may, thus, result in a sheet or tape that may then be cut into filaments 104. Cutting into filaments 104 may be accomplished by means of blades, lasers, or water jets, for example.

Any of the plurality of fibers 11" may comprise any of a carbon fiber, an aramid fiber, an UHMWPE (ultra-high molecular weight polyethylene) fiber, a cellulose fiber, a basalt fiber, or a glass fiber. A melting temperature of these materials is much higher than a melting temperature of the polymer. For example, the melting temperature of carbon fiber may exceed 1000°C at which temperature the component 10', that may comprise a polymer, may decompose, such that it may not be possible to manufacture filaments 104 containing fibers 11" by means of the method depicted in Figure 1a.

A microscopy (scanning electron microscopy, SEM) image of a particle derived from a filament 104 comprising the plurality of fibers 11" is also depicted in Figure 5c. The depicted particle comprises polypropylene (PP) as the polymer encasing the plurality of glass fibers 11". The plurality of fibers 11" constitute 70% by weight of the particle. While the PP is transparent and almost invisible in the microscropy image of Figure 5c, the plurality of fibers 11" aligned in one direction, the alignment direction, is clearly visible.

Figure 5c also depicts the cut edges of the particle being spliced up. This may be a cut artifact arising from the filament 104 being under stress during cutting, possibly leading to splicing and the fanned-out shape after cutting.

Figure 5d depicts an SE) image of cut particles derived from the filament 104 in the shell-core configuration. A typical size of the cut particles may be ~ 100 µm controlled, at least in part, by the cutting frequency and the guiding speed, as described above.

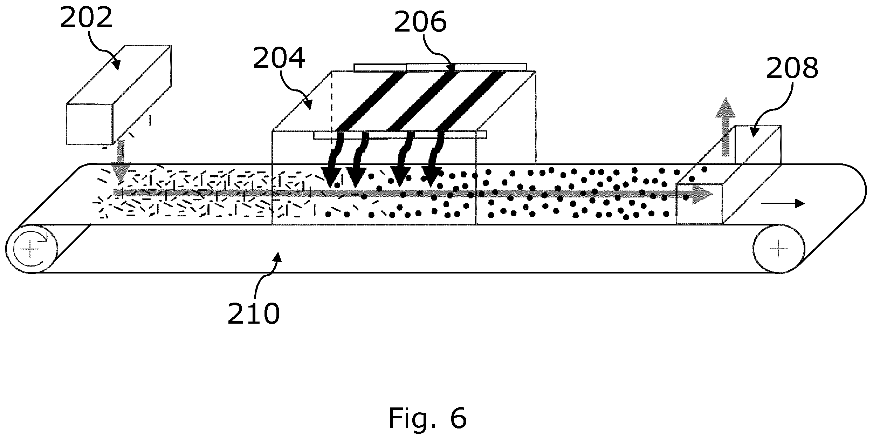

With reference to Figure 6, the cut sections of the filament(s) 104, 104', corresponding to cut particles, as described above, may be sieved by means, for example, of a sieve 202 to achieve a defined and/or desired areal number density on a conveyor belt 210. As described above, the defined and/or desired areal number density may be chosen to avoid formation of agglomeration of the cut sections.

The conveyor belt 210 may be configured to carry the cut particles through a furnace 204. The furnace 204 may comprise, for example, heating elements 206, to heat the cut particles. A temperature of the furnace 204 may be higher than a melting point of the cut particles, such that the cut particles melt, at least in part, on passing through the furnace 204. Because the cut particles lie on a flat surface, that of the conveyor belt 210, the particles exiting the furnace have a characteristic flattened surface. The particles exiting the furnace may constitute the processed plurality of particles, as described above, and may be extracted by means of an extraction element 208.

In some embodiments, the cut sections of the filament(s) 104, 104' may be further processed before being sieved onto the conveyor belt 210. Further processing may, in particular, comprise heating the cut sections to a temperature lower than a melting point of the cut sections to produce the cut particles described above. This may, in particular, be of advantage when the filament 104 comprises a partially or fully drawn yarn (PDY/FDY). Heating the cut sections may cause them to shrink such that cut particles of a smaller length may be produced.

To summarize, embodiments of the present technology relate to a method and a system for manufacturing a powder and may comprise any of the following aspects. Note that the following aspects are to be considered exemplary, but not limiting, aspects of the present invention.

Single or multiple filaments 104, 104' may be cut by feeding them through a channel 116 to a cutting plane in which one or more rotating blades 114 may circulate. The cutting process may be carried out in a cutting chamber 112, i.e., the channel 116 may open into the cutting chamber 112. This may be of advantage in allowing creation of a low-pressure region in the cutting chamber 112, as described above.

While a single filament 104 may also be used, preferably a plurality of filaments 104' may be used. A number of channels 116 through which the filament(s) 104, 104' may be fed may be at least 1. Typical dimensions of the filament 104 may, for example, comprise a diameter of 20 µm, 25 µm, 30 µm, or 40 µm. Even higher diameters may be used.

A bundle of filaments 104' may be fed into each channel 116. A number of filaments 104 in a bundle 104' may be at least 1. Channels 116 may preferably be filled with filaments 104' up to 30% of the available channel volume in order to achieve an optimum cutting result. The plurality of filaments 104' can be twisted and multiplexed in different ways ("multiplexing" meaning combining pluralities of filaments 104', e.g., 3 pluralities of filaments 104' of 30 filaments 104 each bundled into a plurality of 90 filaments 104').

The plurality of filaments 104' can comprise filaments 104 with identical or different diameters. The plurality of filaments 104' can also comprise several materials, e.g., bicomponent or tricomponent yarn. The plurality of filaments 104' may be guided in the channel 116 with the help of an air, generally fluid, flow. The air may be guided in such a way that a minimum of turbulence occurs. Further, a ratio of a number of filaments 104 in a channel 116 to a diameter of the channel 116 may be selected in such a way that the filaments 104, 104' may be sufficiently supported by the channel 116 without getting caught in the channel 116. The air flow may be generated by negative pressure in the cutting chamber 112. The air flow may be generated by overpressure on the feed end of the channel 116 by, e.g., a Venturi nozzle. The plurality of filaments 104' may be, additionally, or alternatively, be guided in the channel 116 with the help of an electrostatic field.

The feed of the filaments 104 may be controlled in order to control the length of the resulting cut sections or cut particles. Assuming that the plurality of filaments 104 is unwound from spools 102 as a semi-finished product, multiple options for feed control may exist:
Feed control may be achieved through driven bobbins: The spools 102 may be driven in a controlled manner and thus unwind the plurality of filaments 104 at a predetermined speed. The air flow in the channel 116 may be set so that the unwound plurality 104' may be sufficiently tensioned and may be continuously fed to the cutting end.

Feed control by godets: The spools 102 may not be driven and the plurality of filaments 104 may be unwound. The feed rate may be controlled by guiding the plurality of filaments 104 over pairs of godets (or other suitable combinations of rotating rollers), as is also known from spinning technology. Exemplary godets 24 are depicted in Figure 1a.

Feed control by a pair of rollers: The plurality of filaments 104 may be conveyed by a pair of rollers, whereby the rotation axes of the rollers are parallel to each other and a gusset area may be formed between them. The gusset area may be so narrow that the plurality of filaments 104 fits through it and a conveying effect (i.e., a pushing of the filaments) may be effected. The rollers can be coated to enhance the conveying effect (e.g. with rubber). Similarly, a pair of conveyor belts (e.g., double belt conveyor, double belt press) may also be used.

The plurality of filaments 104 may also come directly from the spinning process. Galettes (special pairs of rollers used in textile processing) may be typically used to control the feed rate.

The blades 114 may be attached to a (preferably rotationally symmetrical) cutting head 110, which may be driven in rotation. Alternative cutting methods may include translational oscillating blades (as with beard trimmers). However, the rotating blades may be particularly advantageous.

The size of the cut sections or cut particles produced may depend, at least in part, on the filament feed rate, cutting frequency (speed of the cutting head 110 x number of blades 114), and the diameter of the filaments 104. Fluctuations in these parameters or in the reliability of the cutting processes (e.g. decreasing sharpness of the blades 114) may lead to fluctuations in the size of the cut sections or cut particles produced.

By using different filament diameters, multimodal particle size distributions can be produced in a targeted manner. The particle size distribution of the powder can also be influenced by subsequent sieving or sifting processes.

The size of the particles may be determined, at least in part, by the feed rate of the plurality of filaments 104 and the rotational speed of the cutting head 110 and the number of blades 114.

The channels 116 for guiding the plurality of filaments 104, 104' can be arranged in one or more circles on the cutting plane. The center of the circles and the axis of rotation of the cutting head 110 may aligned (concentric arrangement); the channels 116 may be contained in a so-called perforated plate 106. However, for such arrangement, alignment may be required. Alignment may be avoided in an eccentric arrangement that can also be used to force the pulling cut more strongly.

Channels 116 may be arranged perpendicular or non-perpendicular to the cutting plane. The blades 114 may effect a pulling cut.

The blades 114 may be self-sharpening. The rotating blades 114 may rest on the perforated plate 106 and shave off the filaments 104, 104' fed out of it. The area of the perforated plate 106 on which the blades 114 rest may also be referred to as a running surface. The blades 114 can be pressed against the perforated plate 106 with a defined force (contact pressure) during the cutting process. The blades 114 may be made of a softer material than the perforated plate 106, so that the blades 114 may be constantly worn and constantly sharpened on the perforated plate 106.

Alternatively, the blades 114 may not be self-sharpening. The blades 114 may be made of a harder material than the perforated plate 106 (the perforated plate 106 made of steel or ceramic) so that the blades 114 hardly wear out, but are also no longer self-sharpening. It may be then be advantageous for the running surface to be made of a material with particularly good sliding properties. This can also minimize blade wear and reduce the heat generated by friction between the blades 114 and the running surface. Blades 114 may be additionally coated (e.g., with diamond-like materials) to increase the service life, i.e. the blades may retain their sharpness for longer.

Cooling the blades 114 and the perforated plate 106 may be advantageous to prevent the cut sections from melting on the blades 114. Several methods may be used for cooling.

The perforated plate 106 may be provided with internal cooling. For example, water (or another medium) may be pumped through cooling channels that may be arranged as directly as possible under/next to the cutting plane. The temperature of the water may be controlled by a temperature control unit. Alternatively, or additionally, a heat pipe (pipe in which a medium may be vaporized, condensed at another location, and then fed back to the area to be cooled) may be arranged as directly as possible below/level with the cutting plane. Alternatively, or additionally, additional holes or channels through which cooling air may be blown onto the blades 114 may be provided. The arrangement of the additional holes or channels may similar to the filament channels 116 or may be different, e.g., outside the cutting plane, tangential to blade rotation circle inside or outside.

Further, blades 114 may be made slim in the cutting area and more voluminous behind it (reduced contact surface may reduce heat of friction, increased surface area behind may increase heat transfer/cooling capacity).

The cutting head 110 may additionally be equipped with liquid cooling. Additionally, or alternatively, the cutting head 110 may be made from special extremely conductive alloys. Additionally, or alternatively, a length of the blade 114 may be reduced.

Any of the plurality of filaments 104' may be additionally cooled before being fed into the channel 116, or before exiting at the cutting end. The fluid used to guide the filament(s) 104, 104' in the channels 116 may be cooled before it is fed in.

Any of the plurality of filaments 104' can be undrawn, partially drawn (PDY - partially drawn yarn) or fully drawn (FDY - fully drawn yarn). This may result in the following properties for the pulverization process according to the invention.

PDY/FDY may result in a stiffer filament 104: The stiffer the filament 104, the lower the chance that it will evade the cut - i.e., yield may be increased.

Depending on the plastic (or polymer(s) of which the filament 104 is made), stretching can be partially or completely reversed by heating the material (below the melting temperature range). For example, a filament 104 may be stretched by a factor of 3. Cut sections with a length of 100 µm may be produced. The stretching may be reversed by heat treatment and the length of the particles may shrink to 1/3rd, i.e. 33.3 µm. The diameter of the cut section may increase accordingly, as the mass of the cut section remains constant. This effect can be used, e.g., to produce lengths that would otherwise not be possible or to reduce the dispersion of lengths.

An air stream loaded with the cut particles may be led away from the cutting chamber 112 and fed to a cyclone or another suitable component to separate the cut particles and air from each other.

The so-called "Downer Reactor" is known from the literature, in which plastic powder is dispersed in gas so that an aerosol is formed. The aerosol stream is fed into a tubular container and heated so that the particles melt and begin to approach a spherical shape due to the surface tension. It is also known from the literature that these reactors may have a problem that the reactor walls get clogged with powder, so that the yield is significantly reduced and continuous operation over several hours or days may not be possible.

In embodiments of the present invention, the cut particles may be dispersed onto a conveyor belt 210 and transported on the conveyor belt 210 through a continuous furnace 204. The temperature in the furnace 204 may be selected so that the cut particles melt, at least in part. Depending on the viscosity and surface tension of the material of the cut particles, and the initial shape of the cut particles, different particle shapes may be created during the process. As the cut particles lie on the conveyor belt 210, a characteristic flattened side of the particles may be created. The resulting particles then constitute the processed plurality of particles.

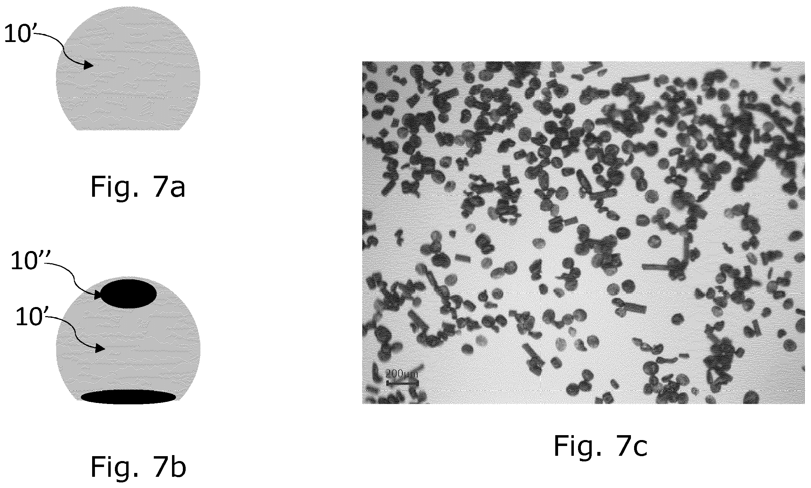

The melting, at least in part, of the cut particles may result in different configurations as depicted in Figures 7a and 7b. In particular, Figures 7a and 7b depict possible results of melting cut particles derived from the filament 104 produced via the process of Figure 1a, viz., filament 104 comprising components 10' and 10" in a shell-core configuration. Figure 7c depicts an SEM image of the processed plurality of particles resulting from passing the cut particles through the furnace 204.

Figure 7a depicts a result of melting a cut particle wherein component 10' has, at least significantly, a lower viscosity than component 10" at the temperatures reached within the furnace 204. Owing to the reduced viscosity component 10' flows much more than component 10" and encases component 10" fully as a result of the melting in the furnace 204. The resulting particle thus comprises a shell comprising component 10' fully enclosing a core comprising component 10".

Figure 7b depicts a result of melting a cut particle wherein component 10' has a slightly lower viscosity than component 10" at the temperatures reached within the furnace 204. Owing to the slightly reduced viscosity component 10' flows little more than component 10" and encases component 10" partially as a result of the melting in the furnace 204. The resulting particle thus comprises a shell comprising component 10' partially enclosing a core comprising component 10", the core also being exposed to an ambient of the particle.

Figure 7c depicts an SEM image of cut particles after passing through the furnace 204. As visible in Figure 7c, and also schematically depicted in Figures 7a and 7b, melting, at least in part, the cut particle results in smoothening of a surface of the cut particle, comprising reduction in an average surface roughness of the particle, as well as reduction (for example, in area and/or volume) of parts of the cut particle that deviate from its generally prismatic shape. As described above, the cut particles are arranged on a conveyor belt 210 while passing through the furnace 204 leading to a flattened face.

The resulting shape, that may correspond generally to a frustum of a sphere, may exhibit better flow characteristics and may, thus, be more suitable for PBF processes. Various advantages and aspects of the characteristic shape, thus produced, are described in EP 24201411.6 also filed by the applicant, the content of which is hereby incorporated by reference.

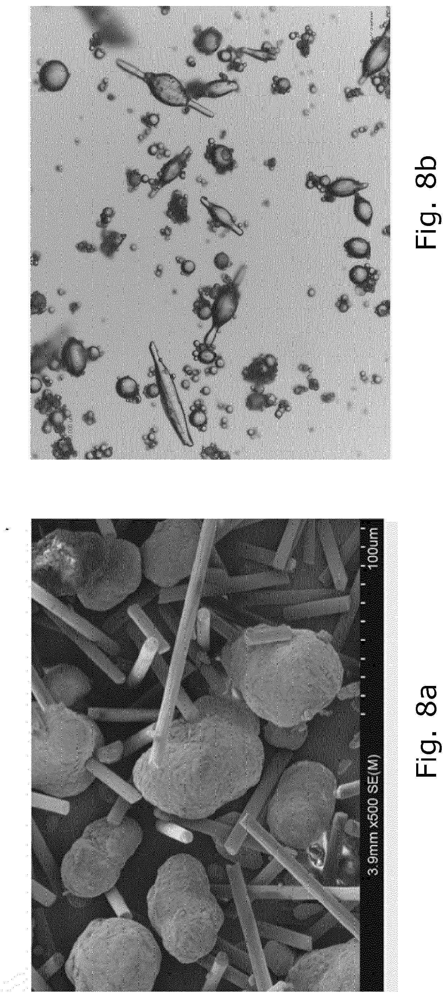

As described above with reference to Figure 5b, it may be of advantage to reinforce powders used for additive manufacturing processes by adding a plurality of fibers 11" to them. Typically, this is done by compounding (or mixing) together particles derived from filaments (such as filament 104) as described above together with the plurality of fibers 11" and grinding the resulting mixture to a desired fine-ness. A microscopy image of the resulting powder is shown in Figure 8a taken from Schmid, Laser Sintering with Plastics*,* Figure 6.18 (ISBN: 978-1-56990-683-5). As depicted in Figure 8a, the resulting powder may contain polymeric particles and fibers of random sizes, and an orientation of the plurality of fibers 11" may be random within the powder. As a result, the increase in strength may be reduced.

In particular, the mitigated increase in strength may be a result of the shorter length of fibers 11" and of their random orientation. The plurality of fibers 11" may have a higher stiffness and strength in a direction, at least significantly, parallel to their length. By decreasing the length of the fibers 11", grinding may reduce this effect. Moreover, fibers 11" may be most resistant to strains along a direction, at least significantly, parallel to their length. By virtue of the random orientation within the powder, it may not be possible to ensure that strains are, at least pre-dominantly, applied only along the length of the fibers 11".

As described above, by producing a sheet or tape with the plurality of fibers 11" aligned in the alignment direction, and by cutting filaments 104 from the tape parallel to the alignment direction, the length, and the orientation of the fibers 11" may be controlled.

Figure 8b depicts an SEM image of the processed plurality of particles resulting from passing particles as depicted in Figure 5b through the furnace 204. As the temperature of the furnace 204 is chosen to be high enough to melt the polymer 10', but not high enough to melt the fibers 11", the resulting particles demonstrate the polymer component 10' spread out over the fibers 11" or clustered together close to a point along the alignment direction. By appropriately aligning such particles on a powder bed before sintering, for example, a strength of the resulting sintered object may be improved, particularly along the alignment direction of the fibers 11".

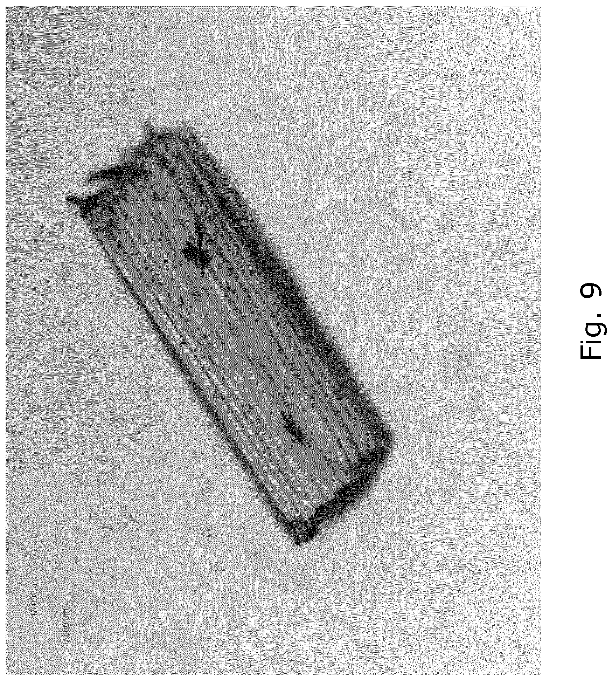

While Figure 8b depicts multiple particles, a microscopy (SEM) image of a single such particle is depicted in Figure 9. Comparing with the image of the particle after cutting, depicted in Figure 5c, it can be seen that melting may result in annealing of the cut artifacts and any sharp edges of the particle, leading to a smoothening as described above.

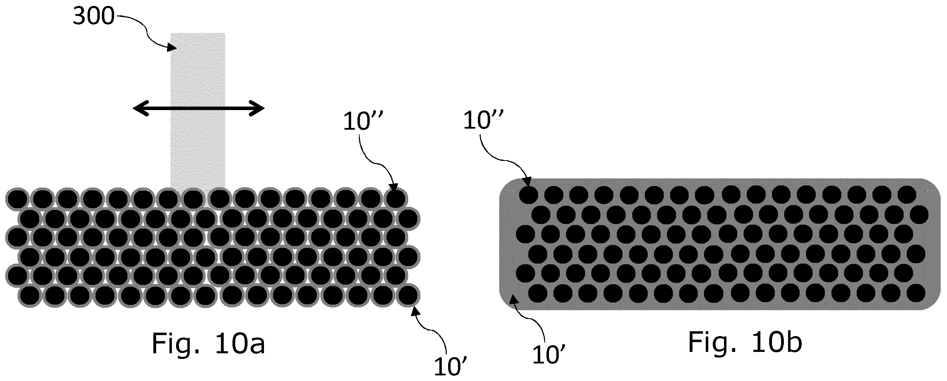

Figures 10a and 10b depict an additive manufacturing process, in particular a laser sintering process, for manufacturing an object using the powder comprising the processed plurality of particles as described above. As depicted in Figure 10a, the powder may be spread in layers over a surface, and a laser 300 may be moved over it. As a result of absorbing radiation from the laser 300, the shell component 10' of the particles may melt and fuse together, while component 10" in the core may remain relatively intact. The resulting object may thus have an internal structure as depicted in Figure 10b comprising component 10" distributed within a shell comprising component 10'.

In particular, if all, or at least a majority of the particles in the processed plurality of particles comprise particles as depicted in Figure 7a, viz., where the shell component fully encases the core, the resulting object may comprise a network of open cells containing component 10" surrounded by component 10' as depicted in Figure 10b. However, if, for example, all or at least a majority of the particles comprise particles as depicted in Figure 7b, where the shell component only partially encases the core, the resulting object may comprise a network of closed cells comprising component 10" surrounded by the component 10'. By appropriately choosing the components 10' and 10", various characteristics of interest may be imparted to the resulting object.

For example, component 10" may comprise an electrically and/or thermally conductive and/or a magnetically permeable material. Formation of the network of open/closed cells may then impart increased electrical and/or thermal conductivity and/or magnetic permeability through the resulting object as predicted, for example, by percolation theory. Or, for example, the filament 104 may comprise three components, with an additional component, say 10‴, encased within component 10". Component 10" may comprise a protective material that may be used to protect the component 10‴. For example, component 10‴ may comprise a flame-retardant material, that may impart increased flame retarding capabilities to the resulting object. However, flame-retardant materials may be easily triggered by the laser 300 during sintering. Component 10" may thus protect the flame-retardant material during sintering allowing the resulting object to have improved flame-retardant capabilities.

Overall, embodiments of the present technology allow for manufacture of powders suitable at least for use in additive manufacturing processes that may exhibit a variety of characteristics of interest that may not be possible using conventional powders derived from single component filaments. Further, by allowing for different configurations of particles resulting from the partial or complete melting of a shell component in a furnace, the present technology allows manufacturing of objects comprising networks of closed/open cells and thus possessing a desired physical property.

Whenever a relative term, such as "about", "substantially" or "approximately" is used in this specification, such a term should also be construed to also include the exact term. That is, e.g., "substantially straight" should be construed to also include "(exactly) straight".

Whenever steps were recited in the above or also in the appended claims, it should be noted that the order in which the steps are recited in this text may be accidental. That is, unless otherwise specified or unless clear to the skilled person, the order in which steps are recited may be accidental. That is, when the present document states, e.g., that a method comprises steps (A) and (B), this does not necessarily mean that step (A) precedes step (B), but it is also possible that step (A) is performed (at least partly) simultaneously with step (B) or that step (B) precedes step (A). Furthermore, when a step (X) is said to precede another step (Z), this does not imply that there is no step between steps (X) and (Z). That is, step (X) preceding step (Z) encompasses the situation that step (X) is performed directly before step (Z), but also the situation that (X) is performed before one or more steps (Y1), ..., followed by step (Z). Corresponding considerations apply when terms like "after" or "before" are used.

While in the above, preferred embodiments have been described with reference to the accompanying drawings, the skilled person will understand that these embodiments were provided for illustrative purpose only and should by no means be construed to limit the scope of the present invention, which is defined by the claims.

## Claims

1. A powder, wherein the powder comprises a processed plurality of particles, wherein at least one, preferably each, of the processed plurality of particles comprises a plurality of components.

2. The powder according to the preceding claim, wherein at least one of the at least one particle is derived from a filament, wherein the filament comprises the plurality of components, wherein one of the plurality of components, that may be referred to as a shell component, encases, at least partially, preferably completely, a core of the filament, the core comprising the other components.

3. The powder according to the preceding claim, wherein at least one other component is not covered, at least in part, by the shell component in the at least one particle.

4. The powder according to claim 1, wherein at least one of the at least one particle is derived from a filament, wherein the filament comprises the plurality of components, and wherein at least one of the plurality of components comprises a plurality of fibers.

5. The powder according to the preceding claim, wherein each of the plurality of fibers is aligned in a defined direction, that may be referred to as an alignment direction.

6. The powder according to any of the 2 preceding claims, wherein at least one of the plurality of components of the filament comprises a polymer, and wherein the polymer partially encases the plurality of fibers in the at least one particle.

7. The powder according to any of the preceding claims and with the features of claim 2, wherein an extension of the filament in a first direction, that may be referred to as a length of the filament, is, at least significantly, greater than an extension of the filament in a second direction, the second direction being, at least significantly, perpendicular to the first direction.

8. The powder according to the preceding claim and with the features of claim 2, wherein each of the plurality of components extends length-wise along the filament.

9. The powder according to claim 5 and with the features of claim 4, wherein the alignment direction is, at least significantly, parallel to the first direction.

10. The powder according to any of the preceding claims, wherein the processed plurality of particles constitutes a majority of the powder.

11. A method for manufacturing a powder, wherein the powder comprises a processed plurality of particles, wherein the method comprises cutting at least one or a plurality of filaments, wherein each of the at least one or the plurality of filaments comprises a plurality of components.

12. The method according to the preceding claim, wherein a result of cutting the at least one or the plurality of filaments is a plurality of cut particles, and wherein the method comprises melting or sintering, at least in part, each of the plurality of cut particles to produce each of the processed plurality of particles.

13. A system for manufacturing a powder, wherein the powder comprises a processed plurality of particles, wherein the system is configured to cut at least one or a plurality of filaments, wherein each of the at least one or the plurality of filaments comprises a plurality of components.

14. A use of the powder according to any of the claims 1 - 10 in an additive manufacturing process or for drug delivery or for manufacturing an expanded polymer or for powder coating.

15. An object produced by an additive manufacturing process, wherein the additive manufacturing process uses a powder according to any of the claims 1 - 10, wherein the object comprises a network of open and/or closed cells, and wherein at least one of the closed (open) cells comprises a first of the plurality of components encased fully (only partially) by a second of the plurality of components.
